# EUROPEAN PATENT APPLICATION

(11) **EP 4 804 595 A1**
(43) Date of publication of application: **09.09.2026**
(21) Application number: 24896152.6
(22) Date of filing: 30.10.2024
(51) Int. Cl.: H04W 24/02

(54) **MEASUREMENT CONFIGURATION METHOD AND APPARATUS**

(30) Priority: 30.11.2023 CN 202311638445
(71) Applicant: Huawei Technologies Co., Ltd., Shenzhen, Guangdong 518129 (CN)
(72) Inventor: ZHONG, Yaping, Shenzhen, Guangdong 518129 (CN); HU, Xingxing, Shenzhen, Guangdong 518129 (CN); LU, Rui, Shenzhen, Guangdong 518129 (CN)
(74) Representative: MERH-IP Matias Erny Reichl Hoffmann Patentanwälte PartG mbB
(86) International application number: PCT/CN2024/128433
(87) International publication number: WO 2025/113061

(57) **Abstract**

Embodiments of this application provide a measurement configuration method and apparatus. The method includes: receiving, by a first terminal device, first configuration information, wherein the first configuration information is used by the first terminal device to perform a first measurement on at least one neighboring cell, and the first measurement is measuring time domain information in which reference signals of the at least one neighboring cell are respectively located; and then sending, by the first terminal device, target measurement information that includes the time domain information in which the reference signals of the at least one neighboring cell are respectively located to a corresponding access network device, so that the access network device can effectively and accurately configure a timing configuration for each of the served terminal devices (including the first terminal device) to measure the reference signals of the neighboring cells based on the target measurement information obtained through measurement by the first terminal device.

## Description

### CROSS-REFERENCE TO RELATED APPLICATIONS

This application claims priority to Chinese Patent Application No. 202311638445.8, filed with the China National Intellectual Property Administration on November 30, 2023, and entitled "Measurement Configuration Method and Apparatus", which is incorporated herein by reference in its entirety.

### TECHNICAL FIELD

This application relates to the field of communication technologies, and in particular, to a measurement configuration method and apparatus.

### BACKGROUND

In application scenarios such as handover and cell reselection, the selection of a target cell is generally based on the measurement results of neighboring cells by the terminal device. Common measurement methods may include: the terminal device performing measurements based on the frequency delivered in system information and the measurement timing configuration (SSB-based measurement timing configuration, SMTC) based on the synchronization signal/physical broadcast channel block (synchronization signal/physical broadcast channel block, SSB); or the base station first delivers the SSB measurement timing configuration SMTC to the terminal device, after which the terminal device performs relevant measurements on the SSB according to the SMTC of the SSB, generates a measurement report, and then reports the measurement report to the base station. The SMTC includes measurement objects (including SSB frequency, SSB subcarrier spacing, SMTC configuration, whitelist and blacklist cells, etc.) and report configurations (such as the method for triggering measurement reports and the format of measurement reports), among others. Regardless of which of the aforementioned measurement methods is used, the SMTC may be configured based on the frequency or may be configured based on different cells on the frequency.

Typically, two base stations, for example, two New Radio (new radio, NR) base stations (a source base station and a target base station), can exchange their respective SMTC of serving cells and/or neighboring cells through an Xn interface. However, in the absence of an Xn interface, the two base stations cannot exchange their respective SMTC, which results in the source base station being unable to deliver accurate SMTC for measuring neighboring cells or neighboring frequency points to the served terminal device. This, in turn, prevents the source base station from ensuring the accuracy of SSB measurements performed by the terminal device.

### SUMMARY

This application proposes a measurement configuration method and apparatus, wherein the method enables a network device to effectively configure, for the served terminal device, timing configuration information for measuring reference signals.

According to a first aspect, an embodiment of this application provides a measurement configuration method. The method may be performed by a first terminal device, or may be performed by a chip or a chip system corresponding to the first terminal device, which is not specifically limited. Using the first terminal device as an example, the method may include: receiving, by the first terminal device, first configuration information, wherein the first configuration information is used by the first terminal device to perform a first measurement on at least one neighboring cell, and the first measurement is a measurement of time domain information in which reference signals of the at least one neighboring cell are respectively located; and sending, by the first terminal device, target measurement information to a first access network device, wherein the target measurement information includes the time domain information in which the reference signals of the at least one neighboring cell are respectively located.

In this embodiment of this application, the first access network device is an access network device serving the first terminal device. The first terminal device may receive the first configuration information from the first access network device, wherein the first configuration information is used by the first terminal device to perform the first measurement on at least one neighboring cell, and the first measurement is a measurement of time domain information in which the reference signals of the at least one neighboring cell are respectively located; then, the first terminal device sends the target measurement information, which includes the time domain information in which the reference signals of the at least one neighboring cell are respectively located, to the first access network device. In this way, the first access network device may obtain the target measurement information through the measurement performed by the first terminal device, and effectively and accurately configure, for each terminal device (including the first terminal device) served by the first access network device, a timing configuration for measuring the reference signals of the neighboring cells.

In a possible implementation, the first configuration information includes information about the at least one neighboring cell and/or information about neighboring frequencies corresponding to the at least one neighboring cell; and the first configuration information is used to indicate the first terminal device to report the target measurement information obtained by performing the first measurement on the at least one neighboring cell and/or the neighboring frequencies corresponding to the at least one neighboring cell.

Through this implementation, the first terminal device may flexibly obtain the target measurement information by performing the first measurement on the reference signal of the neighboring cell, or may effectively obtain the target measurement information by performing the first measurement on the frequency at which the neighboring cell is located.

In a possible implementation, the method further includes: receiving, by the first terminal device, second configuration information from the first access network device, wherein the second configuration information is determined by the first access network device based on the target measurement information, and the second configuration information is used to indicate a timing configuration for the first terminal device to perform a measurement on the reference signals of the at least one neighboring cell.

In this embodiment of this application, the reference signal may be but is not limited to a synchronization signal/physical broadcast channel block (SSB). When the reference signal is an SSB, the timing configuration may be a timing configuration SMTC for SSB measurement.

In this embodiment of this application, the first neighboring cell is used as an example, and the first neighboring cell is any one of the at least one neighboring cell. When the time domain information of the reference signal of the first neighboring cell, which is included in the target measurement information reported by the first terminal device, is slot information based on one or more timing as a reference, the following several cases may be specifically included:
Case 1: The time domain information, in which the reference signal of the first neighboring cell is located, is first slot information using a timing of receiving a downlink reference signal of the serving cell by the first terminal device as a reference.
Case 2: The time domain information, in which the reference signal of the first neighboring cellis located, is second slot information using a timing of sending a downlink reference signal by the first neighboring cell as a reference.
Case 3: The time domain information, in which the reference signal of the first neighboring cell is located, is third slot information using a timing of sending a downlink reference signal by the serving cell of the first terminal device as a reference.

In a possible implementation, when the target measurement information includes the first slot information, the target measurement information may further include but is not limited to at least one of the following: a period of the reference signal of the first neighboring cell, a quantity of reference signals, a type of the reference signal, an identifier ID of the first neighboring cell, or a subcarrier spacing of the reference signal.

When the target measurement information includes the second slot information, the target measurement information may further include but is not limited to at least one of the following: a period of the reference signal of the first neighboring cell, third indication information, a quantity of reference signals, a pattern bitmap of the reference signal, a type of the reference signal, an identifier ID of the first neighboring cell, or a subcarrier spacing of the reference signal, wherein the third indication information is used to indicate that the reference signal of the first neighboring cell is located in a first half frame or a second half frame of a radio frame of the first neighboring cell.

When the target measurement information includes the third slot information, the target measurement information may further include at least one of the following: a period of the reference signal of the first neighboring cell, a quantity of reference signals, a type of the reference signal, an identifier ID of the first neighboring cell, or a subcarrier spacing of the reference signal.

In this embodiment of this application, the first neighboring cell is used as an example, and the first neighboring cell is any one of the at least one neighboring cell. When the time domain information of the reference signal of the first neighboring cell, which is included in the target measurement information reported by the first terminal device, is time window information based on one or more timing as a reference, the following cases may be specifically included:
Case 1: The time domain information, in which the reference signal of the first neighboring cell is located, is first time window information using a timing of receiving the downlink reference signal of the serving cell by the first terminal device as a reference.
Case 2: The time domain information, in which the reference signal of the first neighboring cell is located, is second time window information using a timing of sending the downlink reference signal by the first neighboring cell as a reference.
Case 3: The time domain information, in which the reference signal of the first neighboring cell is located, is third time window information using a timing of sending the downlink reference signal by the serving cell of the first terminal device as a reference.

In the foregoing, the first time window information, the second time window information, or the third time window information may include but is not limited to one or more of a length of the time window, a period of the time window, or an offset of the time window.

In a possible implementation, the method further includes: the first terminal device sends one or more of the following to the first access network device: a timing difference between a timing of receiving the reference signal of the serving cell by the first terminal device and a timing of sending the reference signal by each of the at least one neighboring cell, a first propagation delay from the first terminal device to the serving cell of the first terminal device, a propagation delay from the first terminal device to each of the at least one neighboring cell (a propagation delay from the first terminal device to the first neighboring cell is referred to as a third propagation delay in the following, wherein the first neighboring cell is any one of the at least one neighboring cell), and a first propagation delay difference corresponding to the at least one neighboring cell, wherein the first propagation delay difference corresponding to each neighboring cell is a difference between the propagation delay from the first terminal device to the corresponding neighboring cell and the first propagation delay.

According to a second aspect, this application provides a measurement configuration method. The method may be performed by a first access network device, or may be performed by a chip or a chip system corresponding to the first access network device. This is not specifically limited. Using the first access network device as an example, the method may include: sending, by the first access network device, first configuration information, wherein the first configuration information is used by a first terminal device to perform first measurement on at least one neighboring cell, and the first measurement is a measurement of time domain information in which reference signals of the at least one neighboring cell are respectively located; and receiving, by the first access network device, target measurement information from the first terminal device, wherein the target measurement information includes the time domain information in which the reference signals of the at least one neighboring cell are respectively located.

In this embodiment of this application, the first access network device is an access network device serving a first terminal device. The first access network device may send the first configuration information to the first terminal device, wherein the first configuration information is used by the first terminal device to perform the first measurement on the at least one neighboring cell, and the first measurement is a measurement of time domain information in which the reference signals of the at least one neighboring cell are respectively located; and then the first access network device receives the target measurement information from the first terminal device, wherein the target measurement information includes the time domain information in which the reference signals of the at least one neighboring cell are respectively located. Therefore, it can be learned that the first access network device may subsequently effectively and accurately configure, for each terminal device (including the first terminal device) served by the first access network device, a timing configuration for measuring a reference signal of a neighboring cell based on the target measurement information reported by the first terminal device.

In a possible implementation, the first configuration information includes information about the at least one neighboring cell and/or information about neighboring frequencies corresponding to the at least one neighboring cell; and the first configuration information is used to indicate the first terminal device to report target measurement information obtained by performing first measurement on the at least one neighboring cell and/or the neighboring frequencies corresponding to the at least one neighboring cell.

In a possible implementation, the method further includes: determining, by the first access network device, second configuration information for a target terminal device served by the first access network device based on the target measurement information, wherein the second configuration information is used to indicate a timing configuration for the target terminal device to measure the reference signals of the at least one neighboring cell, and the target terminal device includes the first terminal device; and sending, by the first access network device, the second configuration information to the target terminal device.

Through this implementation, the first access network device can effectively configure, for each terminal device (including the first terminal device) served by the first access network device, the timing configuration for measuring the reference signal of the neighboring cell based on the target measurement information that is measured and reported by the first terminal device, and deliver or indicate the configuration to the corresponding terminal device.

In the embodiments of this application, the reference signal may be but is not limited to a synchronization signal/physical broadcast channel block SSB. When the reference signal is an SSB, the timing configuration may be a timing configuration SMTC for SSB measurement.

In a possible implementation, the method further includes: the first access network device may further receive one or more of the following from the first terminal device: a timing difference between a timing of receiving a reference signal of the serving cell by the first terminal device and a timing of sending a reference signal by each of the at least one neighboring cell, a first propagation delay from the first terminal device to the serving cell of the first terminal device, a propagation delay from the first terminal device to each of the at least one neighboring cell, or a first propagation delay difference corresponding to each of the at least one neighboring cell, wherein the first propagation delay difference corresponding to each neighboring cell is a difference between a propagation delay from the first terminal device to the corresponding neighboring cell and the first propagation delay.

In this embodiment of this application, the sending, by the first terminal device, the target measurement information to the first access network device, so that the first access network device determines, based on the target measurement information, the timing configuration for the target terminal device to measure the reference signals of the at least one neighboring cell, includes but is not limited to the following implementations:
Implementation 1: Using the first neighboring cell as an example, wherein the first neighboring cell is any one of the at least one neighboring cell, and the time domain information, in which the reference signal of the first neighboring cell is located, sent by the first terminal device to the first access network device, is slot information in which the reference signal of the first neighboring cell is located. There may be the following (but not limited to) several cases for the timing of the time domain information in which the reference signal of the first neighboring cell is located:
Case 1: The time domain information, in which the reference signal of the first neighboring cell is located, is first slot information using a timing of receiving the downlink reference signal of the serving cell by the first terminal device as a reference.

In a possible implementation, for the foregoing case 1 (that is, when the target measurement information includes the first slot information), the target measurement information may further include at least one of the following: a period of the reference signal of the first neighboring cell, a quantity of reference signals, a type of the reference signal, an identifier ID of the first neighboring cell, or a subcarrier spacing of the reference signal.

In case 1, the first access network device may determine, based on the target measurement information, the timing configuration performed by the first terminal device on the first neighboring cell. The first access network device does not need to consider the propagation delay difference or the propagation delay difference value of the first terminal device.

In a possible implementation, if the target terminal device further includes a second terminal device, the method may further include: the first access network device may determine, based on the target measurement information, a timing configuration for the second terminal device to measure the reference signal of the first neighboring cell. The second terminal device may be another terminal device served by the first access network device.

The first access network device may determine, based on the target measurement information, the timing configuration for the second terminal device to measure the reference signal of the first neighboring cell, which may be implemented in the following manner:
Manner 1: The first access network device obtains a second propagation delay of the second terminal device, wherein the second propagation delay is a propagation delay from the second terminal device to the serving cell; and the first access network device may determine, based on the target measurement information, the first propagation delay, and the second propagation delay, the timing configuration for the second terminal device to measure the reference signal of the first neighboring cell.
Manner 1 considers a case where the serving cell is a non-terrestrial network (NTN) cell and the first neighboring cell is a terrestrial network (TN) cell. In this case, the first terminal device and the second terminal device are at a relatively large distance from the serving cell, and therefore the propagation delay is relatively large. In contrast, the first terminal device and the second terminal device are at a relatively small distance from the first neighboring cell, and therefore the propagation delay is relatively small and can be ignored. Therefore, the first access network device needs to consider the propagation delay from the first terminal device to the serving cell and the propagation delay from the second terminal device to the serving cell to determine or configure the timing configuration for the second terminal device to measure the reference signal of the first neighboring cell. The following several cases of manner 1 are implemented in a similar manner.
Manner 2: The first access network device obtains a fourth propagation delay of the second terminal device, wherein the fourth propagation delay is a propagation delay from the second terminal device to the first neighboring cell; and the first access network device may determine the timing configuration for the second terminal device to measure the reference signal of the first neighboring cell based on the target measurement information, the fourth propagation delay, and the propagation delay from the first terminal device to the first neighboring cell (that is, the third propagation delay).

Manner 2 considers a case where the serving cell is a terrestrial network (TN) cell, and the first neighboring cell is a non-terrestrial network (NTN) cell. In this case, the first terminal device and the second terminal device are at a relatively large distance from the first neighboring cell, and therefore the propagation delay is relatively large; while the first terminal device and the second terminal device are at a relatively small distance from the serving cell, and therefore the propagation delay is relatively small and can be ignored. Therefore, the first access network device needs to consider the propagation delay from the first terminal device to the first neighboring cell and the propagation delay from the second terminal device to the first neighboring cell to determine or configure the timing configuration for the second terminal device to measure the reference signal of the first neighboring cell. The following several cases of manner 2 are similar.

Manner 3: The first access network device obtains a second propagation delay difference of the second terminal device, wherein the second propagation delay difference is a difference between the propagation delay from the second terminal device to the serving cell and the propagation delay from the second terminal device to the first neighboring cell (that is, the difference between the second propagation delay and the fourth propagation delay mentioned above). The first access network device may determine the timing configuration for the second terminal device to measure the reference signal of the first neighboring cell based on the target measurement information, the first propagation delay difference corresponding to the first neighboring cell, and the second propagation delay difference.

Manner 3 considers a case where both the serving cell and the first neighboring cell are non-terrestrial network (NTN) cells. In this case, the first access network device needs to consider the propagation delays from the first terminal device and the second terminal device to the serving cell and the first neighboring cell, respectively, to determine or configure the timing configuration for the second terminal device to measure the reference signal of the first neighboring cell. The following several cases of manner 3 are similar.

It should be noted that, in addition to serving the first terminal device, the first access network device may also serve one or more other terminal devices. For any one of these terminal devices, the first access network device may implement the process by referring to the manner used to determine the timing configuration, for the second terminal device to measure the reference signal of the first neighboring cell, for the second terminal device, as described above. This is not described in detail here.

Case 2: The time domain information, in which the reference signal of the first neighboring cell is located, is second slot information using a timing of sending a downlink reference signal by the first neighboring cell as a reference. The first neighboring cell is any one of the at least one neighboring cell.

In a possible implementation, for case 2, when the target measurement information includes the second slot information, the target measurement information may further include but is not limited to at least one of the following: a period of the reference signal of the first neighboring cell, third indication information, a quantity of reference signals, a pattern bitmap of the reference signal, a type of the reference signal, an identifier ID of the first neighboring cell, or a subcarrier spacing of the reference signal, wherein the third indication information is used to indicate that the reference signal of the first neighboring cell is located in a first half frame or a second half frame of a system radio frame of the first neighboring cell.

For case 2: The first access network device may determine, based on the target measurement information, the timing configuration performed by the first terminal device on the first neighboring cell in the following manner:
Manner 1: The first access network device determines, based on the target measurement information, the first timing difference, and the first propagation delay (that is, the propagation delay from the first terminal device to the serving cell), the timing configuration for the first terminal device to perform a measurement on the first neighboring cell.
Manner 2: The first access network device determines the timing configuration for the first terminal device to perform a measurement on the first neighboring cell based on the target measurement information, the first timing difference, and a propagation delay (referred to as a third propagation delay) from the first terminal device to the first neighboring cell.
Manner 3: The first access network device determines, based on the target measurement information, the first timing difference, and the first propagation delay difference (that is, the difference between the first propagation delay and the third propagation delay), the timing configuration for the first terminal device to perform a measurement on the reference signal of the first neighboring cell.

In the foregoing, the first timing difference is a difference between a timing of receiving the reference signal of the serving cell by the first terminal device and a timing of receiving the reference signal of the first neighboring cell by the first terminal device.

In a possible implementation, if the target terminal device further includes a second terminal device, the method may further include: the first access network device may determine, based on the target measurement information, the timing configuration for the second terminal device to perform a measurement on the first neighboring cell. The second terminal device may be another terminal device served by the first access network device.

The first access network device may determine the timing configuration for the second terminal device to perform a measurement on the reference signal of the first neighboring cell based on the target measurement information in the following ways:
Manner 1: The first access network device obtains a second propagation delay of the second terminal device, wherein the second propagation delay is a propagation delay from the second terminal device to the serving cell; and the first access network device determines the timing configuration for the second terminal device to perform a measurement on the reference signal of the first neighboring cell based on the target measurement information, the first timing difference, and the second propagation delay.
Manner 2: The first access network device obtains a fourth propagation delay of the second terminal device, wherein the fourth propagation delay is a propagation delay from the second terminal device to the first neighboring cell; and the first access network device determines the timing configuration for the second terminal device to perform a measurement on the reference signal of the first neighboring cell based on the target measurement information, the first timing difference, and the fourth propagation delay.
Manner 3: The first access network device obtains a second propagation delay difference of the second terminal device, wherein the second propagation delay difference is a difference (namely, a difference between the second propagation delay and the fourth propagation delay) between the propagation delay from the second terminal device to the serving cell and the propagation delay from the second terminal device to the first neighboring cell; and the first access network device determines the timing configuration for the first terminal device to perform a measurement on the reference signal of the first neighboring cell based on the target measurement information, the first timing difference, and the second propagation delay difference.

Case 3: The time domain information, in which the reference signal of the first neighboring cell is located, is third slot information using a timing of sending a downlink reference signal by the serving cell of the first terminal device as a reference. The first neighboring cell is any one of the at least one neighboring cell.

In a possible implementation, for case 3, when the target measurement information includes the third slot information, the target measurement information may further include but is not limited to at least one of the following: a period of the reference signal of the first neighboring cell, a quantity of reference signals, a type of the reference signal, an identifier ID of the first neighboring cell, or a subcarrier spacing of the reference signal.

For case 3, where the first access network device determines, based on the target measurement information, the timing configuration performed by the first terminal device on the first neighboring cell may be implemented in the following manner:
Manner 1: The first access network device determines, based on the target measurement information and the first propagation delay, the timing configuration performed by the first terminal device on the reference signal of the first neighboring cell.
Manner 2: The first access network device determines, based on the target measurement information and a propagation delay (namely, the third propagation delay) from the first terminal device to the first neighboring cell, the timing configuration performed by the first terminal device on the reference signal of the first neighboring cell.
Manner 3: The first access network device determines, based on the target measurement information and the first propagation delay difference (that is, the difference between the first propagation delay and the third propagation delay), the timing configuration for the first terminal device to perform a measurement on the reference signal of the first neighboring cell.

In a possible implementation, if the target terminal device further includes a second terminal device, the method may further include: the first access network device may determine, based on the target measurement information, a timing configuration for the second terminal device to perform a measurement on the first neighboring cell. The second terminal device may be another terminal device served by the first access network device.

The first access network device may determine, based on the target measurement information, the timing configuration for the second terminal device to perform a measurement on the reference signal of the first neighboring cell, which may be implemented in the following manner:
Manner 1: The first access network device obtains a second propagation delay of the second terminal device, wherein the second propagation delay is a propagation delay from the second terminal device to the serving cell; and the first access network device determines, based on the target measurement information and the second propagation delay, the timing configuration for the second terminal device to perform a measurement on the reference signal of the first neighboring cell.
Manner 2: The first access network device obtains a fourth propagation delay of the second terminal device, wherein the fourth propagation delay is a propagation delay from the second terminal device to the first neighboring cell; and the first access network device determines, based on the target measurement information and the fourth propagation delay, a timing configuration for the second terminal device to perform a measurement on the reference signal of the first neighboring cell.
Manner 3: The first access network device obtains a second propagation delay difference of the second terminal device, wherein the second propagation delay difference is a difference (namely, a difference between the second propagation delay and the fourth propagation delay) between the propagation delay from the second terminal device to the serving cell and the propagation delay from the second terminal device to the first neighboring cell; and the first access network device determines, based on the target measurement information and the second propagation delay difference, a timing configuration for the second terminal device to perform a measurement on the reference signal of the first neighboring cell.

Implementation 2: Using the first neighboring cell as an example, the first neighboring cell is any one of the at least one neighboring cell, and the time domain information, in which the reference signal of the first neighboring cell, sent by the first terminal device to the first access network device, is located, is time window information in which the reference signal of the first neighboring cell is located. There may be the following (or more) possible cases for the timing of the time window information of the reference signal of the first neighboring cell:
Case 1: The time domain information, in which the reference signal of the first neighboring cell is located, is first time window information using a timing of receiving the downlink reference signal of the serving cell by the first terminal device as a reference. The first time window information may include at least one of, for example, a length of the time window, a period of the time window, or an offset of the time window.

In case 1, the first access network device may determine, based on the first time window information using the timing of receiving the downlink reference signal of the serving cell by the first terminal device as a reference, a timing configuration for the first terminal device to perform a measurement on the reference signal of the first neighboring cell. For example, the first access network device may use the first time window, based on a timing of receiving the downlink reference signal of the serving cell by the first terminal device as a reference, as the timing configuration for the first terminal device to perform a measurement on the reference signal of the first neighboring cell.

In a possible implementation, if the target terminal device further includes the second terminal device, the method may further include: the first access network device may determine, based on the target measurement information, a timing configuration for the second terminal device to perform a measurement on the first neighboring cell. The second terminal device may be another terminal device served by the first access network device.

The first access network device may determine, based on the target measurement information, the timing configuration for the second terminal device to perform a measurement on the reference signal of the first neighboring cell in the following ways:
Manner 1: The first access network device obtains a second propagation delay of the second terminal device, and then determines the timing configuration for the second terminal device to perform a measurement on the reference signal of the first neighboring cell based on the first time window information, the first timing difference, and the second propagation delay.
Manner 2: The first access network device obtains a fourth propagation delay of the second terminal device, wherein the fourth propagation delay is a propagation delay from the second terminal device to the first neighboring cell; and then determines, based on the first time window information, the first timing difference, and the fourth propagation delay, the timing configuration for the second terminal device to perform a measurement on the reference signal of the first neighboring cell.
Manner 3: The first access network device obtains a second propagation delay difference (that is, the difference between the second propagation delay and the fourth propagation delay mentioned above) of the second terminal device; and then determines, based on the first time window information, the first timing difference, and the second propagation delay difference, the timing configuration for the second terminal device to perform a measurement on the reference signal of the first neighboring cell.

In the foregoing, the first timing difference is a difference between a timing of receiving the reference signal of the serving cell by the first terminal device and a timing of sending the reference signal by the first neighboring cell.

Case 2: The time domain information, in which the reference signal of the first neighboring cell is located, is second time window information using a timing of sending a downlink reference signal by the first neighboring cell as a reference. The second time window information may include but is not limited to at least one of a length of the time window, a period of the time window, or an offset of the time window.

In case 2, the first access network device determines, based on the second time window information, the first propagation delay (that is, the propagation delay from the first terminal device to the serving cell), the third propagation delay (that is, the propagation delay from the first terminal device to the first neighboring cell), or the first propagation delay difference, a timing configuration for the first terminal device to perform a measurement on the reference signal of the first neighboring cell.

In a possible implementation, if the target terminal device further includes the second terminal device, the method may further include: the first access network device may determine, based on the target measurement information, a timing configuration for the second terminal device to perform a measurement on the reference signal of the first neighboring cell. The second terminal device may be another terminal device served by the first access network device.

The first access network device may determine, based on the target measurement information, the timing configuration for the second terminal device to perform a measurement on the reference signal of the first neighboring cell in the following ways:
Manner 1: The first access network device obtains the second propagation delay of the second terminal device; and the first access network device determines, based on the second time window information and the second propagation delay, the timing configuration for the second terminal device to perform a measurement on the reference signal of the first neighboring cell.
Manner 2: The first access network device obtains a fourth propagation delay (that is, a propagation delay from the second terminal device to the first neighboring cell) of the second terminal device; and the first access network device determines, based on the second time window information and the fourth propagation delay, the timing configuration for the second terminal device to perform a measurement on the reference signal of the first neighboring cell.
Manner 3: The first access network device obtains a second propagation delay difference of the second terminal device; and the first access network device determines, based on the second time window information and the second propagation delay difference (that is, the difference between the second propagation delay and the fourth propagation delay), the timing configuration for the second terminal device to perform a measurement on the reference signal of the first neighboring cell.

Case 3: The time domain information, in which the reference signal of the first neighboring cell is located, is third time window information using a timing of sending a downlink reference signal by the serving cell of the first terminal device as a reference. The third time window information includes one or more of the following: a length of the time window, a period of the time window, or an offset of the time window.

In case 3, the first access network device determines, based on the third time window information and the first propagation delay (that is, the propagation delay from the first terminal device to the serving cell) or the third propagation delay (that is, the propagation delay from the first terminal device to the first neighboring cell), a timing configuration for the first terminal device to perform a measurement on the reference signal of the first neighboring cell.

In a possible implementation, if the target terminal device further includes the second terminal device, the method may further include: the first access network device may determine, based on the target measurement information, a timing configuration for the second terminal device to perform a measurement on the reference signal of the first neighboring cell. The second terminal device may be another terminal device served by the first access network device.

The first access network device may determine, based on the target measurement information, the timing configuration for the second terminal device to perform a measurement on the reference signal of the first neighboring cell in the following ways:
Manner 1: The first access network device obtains a second propagation delay (a propagation delay from the second terminal device to the serving cell) of the second terminal device, and then determines the timing configuration for the second terminal device to perform a measurement on the reference signal of the first neighboring cell based on the third time window information and the second propagation delay.
Manner 2: The first access network device obtains a fourth propagation delay (that is, a propagation delay from the second terminal device to the first neighboring cell) of the second terminal device, and then determines the timing configuration for the second terminal device to perform a measurement on the reference signal of the first neighboring cell based on the third time window information and the fourth propagation delay.
Manner 3: The first access network device obtains a second propagation delay difference (that is, a difference between the second propagation delay and the fourth propagation delay), and then determines the timing configuration for the second terminal device to perform a measurement on the reference signal of the first neighboring cell based on the third time window information and the second propagation delay difference.

The foregoing uses the first neighboring cell as an example for description. The first access network device may determine the timing configuration for the terminal device served by the first access network device to measure the reference signals of other neighboring cells in accordance with the foregoing method, and details will not be described one by one herein.

An embodiment of this application further provides a measurement configuration method. For details of the method, refer to the following third aspect, fourth aspect, and fifth aspect.

According to a third aspect, an embodiment of this application provides a measurement configuration method. The method may be performed by a first access network device, or may be performed by a chip or a chip system corresponding to the first access network device. This is not specifically limited herein. Using the first access network device as an example, the method may include: sending, by the first access network device, first request information to a core network element, wherein the first request information is used to request first configuration information of a second access network device, and the first configuration information is used to indicate time domain information in which a reference signal of the second access network device is located; and receiving, by the first access network device, the first configuration information from the core network element, wherein the first configuration information is reported by the second access network device to the core network element.

In the solution of this application, the first access network device may obtain, through the core network element, the time domain information of the reference signal of the neighboring access network device (the second access network device), so that the first access network device can effectively and accurately obtain a timing configuration for measuring the reference signal of the neighboring access network device (the second access network device) based on the time domain information of the reference signal of the neighboring access network device (the second access network device).

In a possible implementation, the method further includes: sending, by the first access network device, second configuration information to the first terminal device, wherein the second configuration information is determined based on the first configuration information, and the second configuration information is used to indicate a timing configuration for the first terminal device to perform a measurement on a reference signal of at least one neighboring cell. Through this implementation, the first access network device can effectively configure a timing configuration for the first terminal device served by the first access network device to measure the reference signal of the neighboring cell.

In a possible implementation, the first request information sent by the first access network device to the core network element includes indication information of the second access network device, or the first request information includes first location information that is associated with the second access network device. Correspondingly, the first configuration information sent by the core network element to the first access network device may include configuration information for all cells served by the second access network device.

In another possible implementation, the first request information sent by the first access network device to the core network element includes indication information of the second network device and indication information of the second cell served by the second network device. Correspondingly, the first configuration information sent by the core network element to the first access network device may include configuration information for the second cell.

In the embodiments of this application, the configuration information of the cell may include but is not limited to one or more of the following: frequency information of the cell, a subcarrier spacing of a reference signal of the cell, a timing configuration of a reference signal of the cell, a pattern bitmap of the reference signal, a physical cell identifier (PCI), and coverage information of the cell.

According to a fourth aspect, an embodiment of this application provides a measurement configuration method. The method may be performed by a core network element, or may be performed by a chip or a chip system corresponding to the core network element, which is not specifically limited. Using the core network element as an example, the method may include: receiving, by the core network element, first request information from a first access network device; wherein the first request information is used to request first configuration information of a second access network device; the first configuration information is used to indicate time domain information in which a reference signal of the second access network device is located; and sending, by the core network element, the first configuration information of the second access network device to the first network device based on the first request information.

In a possible implementation, the method further includes: receiving, by the core network element, first configuration information from at least one access network device; wherein the first configuration information of the at least one access network device includes first configuration information of a second access network device.

In a possible implementation, the first request information sent by the first access network device to the core network element includes indication information of the second access network device, or the first request information includes first location information that is associated with the second access network device. Correspondingly, the first configuration information sent by the core network element to the first access network device may include configuration information for all cells served by the second access network device.

In another possible implementation, the first request information sent by the first access network device to the core network element includes indication information of the second network device and indication information of a second cell served by the second network device. Correspondingly, the first configuration information sent by the core network element to the first access network device may include configuration information for the second cell.

In the embodiments of this application, the configuration information of the cell may include but is not limited to one or more of the following: frequency information of the cell, subcarrier spacing of a reference signal of the cell, timing configuration of a reference signal of the cell, a pattern bitmap of the reference signal, a physical cell identifier (PCI), and coverage information of the cell.

According to a fifth aspect, this application provides a measurement configuration method. The method may be performed by a second access network device, or may be performed by a chip or a chip system corresponding to the second access network device, which is not specifically limited. Using the second access network device as an example, the method may include: generating, by the second access network device, first configuration information; and sending, by the second access network device, the first configuration information to a core network element, wherein the first configuration information is used to indicate time domain information in which a reference signal of the second access network device is located.

In a possible implementation, the first configuration information includes configuration information of at least one cell served by the second access network device, and the configuration information of each cell includes one or more of the following: frequency information of the cell, a subcarrier spacing of a reference signal of the cell, a timing configuration of a reference signal of the cell, a pattern bitmap of the reference signal, a physical cell identifier (PCI), and coverage information of the cell.

According to a sixth aspect, an embodiment of this application provides a communication system. The communication system may include a first terminal device and a first access network device; the first terminal device is configured to perform the method according to the first aspect or any possible implementation thereof; and the first access network device is configured to perform the method according to the second aspect or any possible implementation thereof. Optionally, the communication system further includes another access network device (for example, a second access network device) that is adjacent in location to the first access network device.

According to a seventh aspect, an embodiment of this application further provides a communication system, wherein the communication system may include a first access network device, a core network element, and a second access network device; the first access network device is configured to perform the method according to the third aspect or any possible implementation thereof; the core network element is configured to perform the method according to the fourth aspect or any possible implementation thereof; and the second access network device is configured to perform the method according to the fifth aspect or any possible implementation thereof.

According to an eighth aspect, an embodiment of this application further provides a communication apparatus. The apparatus may be configured to perform the method in the first aspect. The apparatus may be a first terminal device, or the apparatus may be a component (for example, a chip, a chip system, or a circuit) in the first terminal device, or may be an apparatus that can be used in a matching manner with the first terminal device.

In a possible implementation, the apparatus may include modules or units that are in one-to-one correspondence with the method/operation/step/action described in the first aspect and that are configured to perform the method/operation/step/action. The module or unit may be a hardware circuit, may be software, or may be implemented by a hardware circuit in combination with software. In a possible implementation, the apparatus may include a processing unit (which may also be referred to as a processing module) and a communications unit (which may also be referred to as a communications module), wherein the communications unit may be configured to perform a receiving and/or sending function, and the processing unit may be configured to perform the method according to any one of the first aspect or the possible implementations of the first aspect.

According to a ninth aspect, an embodiment of this application further provides a communication apparatus. The apparatus may be configured to perform the method in the second aspect or the third aspect. The apparatus may be a first access network device, or the apparatus may be a component (for example, a chip, a chip system, or a circuit) in the first access network device, or may be an apparatus that can be used in a matching manner with the first access network device.

In a possible implementation, the apparatus may include modules or units that are in one-to-one correspondence with the method/operation/step/action described in the second aspect or the third aspect and that are configured to perform the method/operation/step/action. The module or unit may be a hardware circuit, may be software, or may be implemented by a hardware circuit in combination with software. In a possible implementation, the apparatus may include a processing unit (which may also be referred to as a processing module) and a communications unit (which may also be referred to as a communications module). The communications unit may be configured to perform a receiving and/or sending function, and the processing unit may be configured to perform the method according to any one of the second aspect or the possible implementations of the second aspect, or the processing unit may be configured to perform the method according to any one of the third aspect or the possible implementations of the third aspect.

According to a tenth aspect, an embodiment of this application further provides a communication apparatus. The apparatus may be configured to perform the method in the fourth aspect. The apparatus may be a core network element, or the apparatus may be a component (for example, a chip, a chip system, or a circuit) in a core network element, or may be an apparatus that can be used in a matching manner with a core network element.

In a possible implementation, the apparatus may include modules or units that are in one-to-one correspondence with the method/operation/step/action described in the fourth aspect, wherein the module or unit may be a hardware circuit, or may be software, or may be implemented by a combination of a hardware circuit and software. In a possible implementation, the apparatus may include a processing unit (which may also be referred to as a processing module) and a communications unit (which may also be referred to as a communications module), wherein the communications unit may be configured to perform a receiving and/or sending function, and the processing unit may be configured to perform the method according to any one of the fourth aspect or the possible implementations of the fourth aspect.

According to an eleventh aspect, an embodiment of this application further provides a communication apparatus. The apparatus may be configured to perform the method in the fifth aspect. The apparatus may be a second access network device, or the apparatus may be a component (for example, a chip, a chip system, or a circuit) in the second access network device, or may be an apparatus that can be used in a matching manner with the second access network device.

In a possible implementation, the apparatus may include modules or units that are in one-to-one correspondence with the method/operation/step/action described in the fifth aspect. The module or unit may be a hardware circuit, may be software, or may be implemented by a hardware circuit in combination with software. In a possible implementation, the apparatus may include a processing unit (which may also be referred to as a processing module) and a communications unit (which may also be referred to as a communications module), wherein the communications unit may be configured to perform a receiving and/or sending function, and the processing unit may be configured to perform the method according to any one of the fifth aspect or the possible implementations of the fifth aspect.

According to a twelfth aspect, an embodiment of this application provides an apparatus, wherein the apparatus includes at least one processor and a communication interface; wherein the communication interface is configured to communicate with another apparatus; and the processor is configured to run a group of programs, so that the apparatus implements the method provided in the first aspect or any possible implementation of the first aspect, or implements the method provided in the second aspect or any possible implementation of the second aspect, or implements the method provided in the third aspect or any possible implementation of the third aspect, or implements the method provided in the fourth aspect or any possible implementation of the fourth aspect, or implements the method provided in the fifth aspect or any possible implementation of the fifth aspect.

According to a thirteenth aspect, an embodiment of this application further provides a computer storage medium, wherein the storage medium stores a software program, and when the software program is read and executed by one or more processors, the method provided in the first aspect or any possible implementation of the first aspect, or the method provided in the second aspect or any possible implementation of the second aspect, or the method provided in the third aspect or any possible implementation of the third aspect, or the method provided in the fourth aspect or any possible implementation of the fourth aspect, or the method provided in the fifth aspect or any possible implementation of the fifth aspect can be implemented.

According to a fourteenth aspect, an embodiment of this application further provides a computer program product comprising instructions. When the computer program product is run on a computer, the method provided in any one of the first aspect or the possible implementations of the first aspect is performed, or the method provided in any one of the second aspect or the possible implementations of the second aspect is performed, or the method provided in any one of the third aspect or the possible implementations of the third aspect is performed, or the method provided in any one of the fourth aspect or the possible implementations of the fourth aspect is performed, or the method provided in any one of the fifth aspect or the possible implementations of the fifth aspect is performed.

According to a fifteenth aspect, an embodiment of this application further provides a chip system, wherein the chip system includes a processor, configured to support a first terminal device in implementing the functions involved in the first aspect; or configured to support a first access network device in implementing the functions involved in the second aspect or the third aspect; or configured to support a core network element in implementing the functions involved in the fourth aspect; or configured to support a second access network device in implementing the functions involved in the fifth aspect.

In a possible design, the chip system further includes a memory, wherein the memory is configured to store necessary program instructions and data executed by the loading apparatus. The chip system may be formed by a chip, or may include a chip and other discrete components.

It should be noted that the technical effects that can be achieved by any one of the possible implementations of the sixth aspect to the fifteenth aspect or the possible implementations of the sixth aspect to the fifteenth aspect may be correspondingly referred to the technical effects that can be achieved by the possible implementations of the first aspect to the fifth aspect or any one of the possible implementations of the first aspect to the fifth aspect; these will not be repeated here.

### BRIEF DESCRIPTION OF DRAWINGS

FIG. 1 is a schematic diagram of timing and synchronization of base stations in an NTN and a TN according to an embodiment of this application;
FIG. 2 is a possible and non-limiting communication system to which an embodiment of this application is applicable;
FIG. 3 is a schematic diagram of a distributed network structure to which an embodiment of this application is applicable;
FIG. 4A is a communication system to which a method according to an embodiment of this application is applicable;
FIG. 4B is another communication system to which the method according to an embodiment of this application is applicable;
FIG. 4C is still another communication system to which the method according to an embodiment of this application is applicable;
FIG. 4D is yet another communication system to which the method according to an embodiment of this application is applicable;
FIG. 5 is a schematic flowchart of a measurement configuration method according to an embodiment of this application;
FIG. 6 is a schematic flowchart of Implementation 1 according to an embodiment of this application;
FIG. 7 is a schematic flowchart of another measurement configuration method according to an embodiment of this application;
FIG. 8 is a schematic flowchart of Implementation 2 according to an embodiment of this application;
FIG. 9 is a schematic diagram of a communication apparatus according to an embodiment of this application;
FIG. 10 is a schematic diagram of another communication apparatus according to an embodiment of this application;
FIG. 11 is a schematic diagram of another chip apparatus according to an embodiment of this application.

### DESCRIPTION OF EMBODIMENTS

The technical solutions in embodiments of this application are clearly and completely described in the following with reference to the accompanying drawings in embodiments of this application. The terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context. In embodiments of this application, unless otherwise specified, the number of nouns indicates "a singular noun or a plural noun", that is, "one or more". "At least one" means one or more, and "a plurality of" means two or more. The term "and/or" describes an association relationship between associated objects, and indicates that three relationships may exist. For example, A and/or B may indicate the following cases: Only A exists, both A and B exist, or only B exists, wherein A and B may be singular or plural. The character "/" generally indicates an "or" relationship between the associated objects. For example, A/B indicates A or B. "At least one of the following" or a similar expression thereof refers to any combination of these items, including any combination of a single item or a plurality of items. For example, at least one of a, b, or c indicates that there may be a, b, c, a and b, a and c, b and c, or a, b, and c, wherein a, b, and c may be singular or multiple.

The use of terms such as "an embodiment" or "some embodiments" described in this specification means that one or more embodiments of this application include specific features, structures, or characteristics described in connection with these embodiments. Therefore, the phrases "in one embodiment," "in some embodiments," "in other embodiments," and the like, which appear at different places in this specification, do not necessarily refer to the same embodiment, but instead mean "one or more but not all embodiments," unless otherwise specifically emphasized. The term "embodiment" in this specification is used in the same way as the foregoing. The terms "include," "comprise," "have," and their variants all mean "include but not limited to," unless otherwise specifically emphasized. The terms "example" or "for example" and the like are used to indicate an example, an illustration, or a description, and any embodiment or design solution described as "an example" or "for example" should not be construed as being more preferred or having more advantages than other embodiments or design solutions. The use of the terms "example" or "for example" is intended to present related concepts in a specific manner for ease of understanding.

In the embodiments of this application, "a plurality of" means two or more. It should be noted that, in the descriptions of the embodiments of this application, terms such as "first", "second", "1", and "2" are used for distinguishing and description purposes, and should not be construed as indicating or implying relative importance, or as indicating or implying a sequence. In addition, the term "used to indicate" mentioned in the descriptions of the embodiments of this application may include both direct indication and indirect indication. When it is described that some indication information is used to indicate A, it may include that the indication information directly indicates A or indirectly indicates A, and does not necessarily mean that the indication information definitely carries A. In addition, steps corresponding to dashed-line boxes or dashed lines in the accompanying drawings of this specification are steps for optional implementation.

This application provides a communication method. To better understand the solutions in the embodiments of this application, the following first explains names and related technical features involved in the embodiments of this application. It should be noted that these explanations are intended to make the embodiments of this application easier to understand, and should not be construed as a limitation on the protection scope claimed in this application.

### 1. SSB:

In a 5G mobile communication system, the synchronization signal block is generally sent together with the master information block (main information block, MIB) on the physical broadcast channel (physical broadcast channel, PBCH), to form an SS/PBCH block. The SSB described in the following embodiments of this application may also refer to the SS/PBCH block. The synchronization signal (synchronization signal block, SS) may include a primary synchronization signal (primary synchronisation signal, PSS) and a secondary synchronization signal (secondary synchronisation signal, SSS).

The PSS may be used to transmit a cell ID, and the SSS may be used to transmit a cell group ID. The cell ID and the cell group ID jointly determine a plurality of physical cell identities (physical cell identity, PCI) in the 5G communication system. Once the terminal successfully searches for the PSS and the SSS, the terminal knows the physical cell identity of the 5G carrier, thereby being capable of parsing a system message included in the SSB.

### 2. SSB-based Measurement Timing Configuration (SSB-based measurement timing configuration, SMTC):

Each cell periodically transmits one or more SSB beams (i.e., SSB beam sweeping) in the time domain, and the SSB beams of each cell are configured at the same frequency domain position in the frequency domain. To ensure accurate and complete measurement of all SSB beams under each cell, when the base station issues a measurement configuration, it not only indicates the SSB frequency points that need to be measured but also specifies the timing position and duration for initiating SSB measurements. This introduces the concept of SSB-based Measurement Timing Configuration (SMTC). The SMTC information can be used to indicate the time window configured by the network device for the terminal device to perform SSB-based measurements. Through the configuration of SMTC, the time window for the terminal to search for SSB can be effectively indicated, thereby reducing unnecessary measurement power consumption by the terminal.

Using SSB-based measurement as an example, in this embodiment of this application, the SMTC information may further be extended to indicate a measurement window configured by the network device for the terminal device to perform a measurement on another downlink reference signal (for example, a channel state information reference signal (channel state information reference signal, CSI-RS), a cell-specific reference signal (cell-specific reference signal, CS-RS), a UE-specific reference signal (ue-specific reference signal, US-RS), or a demodulation reference signal (demodulation reference signal, DMRS)) by the network device. The measurement window extended to measurement of another reference signal may be named in another name, which is not limited herein.

The system frame number (system frame number, SFN) of the measurement window satisfies the following formula: SFN mod T = floor (offset/10), wherein SFN is the system frame number of the measurement window, mod denotes the modulo operation, floor denotes the rounding down operation, offset is the offset, and T = ceil (periodicity/10). Here, ceil denotes the rounding up operation, and periodicity is the period of the measurement window. If the period of the measurement window is greater than five subframes, the subframe number of the measurement window satisfies the following formula: subframe = offset mod 10. If the period of the measurement window is less than or equal to five subframes, the subframe number of the measurement window satisfies the following formula: subframe = offset, or subframe = offset + 5. Here, subframe is the subframe number of the measurement window. The offset offset and the period periodicity of the measurement window are configured by the base station for the terminal.

Currently, the protocol defines three types of SMTCs, namely SMTC1, SMTC2, and SMTC3, wherein SMTC1 is defined as a primary SMTC.
(1) SMTC1 mainly includes three parameters: periodicity (periodicity), offset (offset), and duration (duration). The periodicity indicates a frequency at which the terminal measures an SSB; the offset indicates a time domain start position of a measurement time window, wherein the offset does not exceed the measurement periodicity; and the duration indicates a duration for the terminal to measure the SSB, that is, a duration of the measurement time window. It may be understood that SMTC1 does not limit a specific cell, that is, the terminal may measure SSBs of all possible cells (including a serving cell) within a measurement time window configured by the SMTC1.
(2) SMTC2 mainly includes a cell list (pci-List) and a measurement periodicity. Compared with SMTC1, SMTC2 is used to measure SSBs of only some specific cells, and a measurement periodicity of SMTC2 is generally shorter than a measurement periodicity configured by SMTC1, but SMTC2 reuses the same offset and duration as those of SMTC1.
(3) SMTC3 not only allows for the separate configuration of measurement intervals, offsets, durations, and cell lists, but also enables the specification of the index of the SSB to be measured at the frequency to be measured. SMTC is generally used in integrated access backhaul (integrated access backhaul, IAB) scenarios.

Compared to terrestrial communication systems, satellite communication systems may require hundreds or even thousands of SSB beams. Considering that in satellite communication systems, the delays of SSB signals received from the serving satellite and adjacent satellites at the terminal vary, using the same offset may result in the failure to measure the SSB signals from adjacent satellites within the measurement time window configured by SMTC, thereby leading to measurement failure. To address this issue, the protocol has introduced SMTC4 to account for the different delays of signals from different satellites. SMTC4 includes a cell list and an offset, wherein an offset can be configured for each cell list, and a maximum of four cell lists can be configured. Compared to SMTC1, with SMTC4, the network side can calculate the arrival delays of signals from different satellites based on the location information of each satellite and the terminal's location information, and configure the corresponding cell lists and offsets in SMTC4 to ensure that the SSB signals from adjacent satellites can be detected by the terminal at the correct time positions. As for the measurement interval and duration, SMTC4 shares these parameters with SMTC1.

In other words, for the satellite communication system, for each to-be-measured frequency, the network device may configure the SMTC1 for the terminal, so that the terminal may measure the SSB of the at least one cell based on the SMTC1, wherein the at least one cell includes the serving cell of the terminal; or the network device may configure the SMTC1 and the SMTC4 for the terminal, so that the terminal may measure the SSB of the at least one cell based on the SMTC1, and measure the SSB of each cell in the at least one cell list based on the SMTC4.

In the following embodiments of this application, an example in which an SMTC corresponding to one to-be-measured frequency is used for description. When there are a plurality of to-be-measured frequencies, refer to the implementation.

### 3. SSB measurement configuration:

In scenarios such as handover and cell reselection, selection of a target cell is generally based on a measurement result of a neighboring cell of the terminal.
(1) The terminal in the idle state performs measurement based on the frequency and the SMTC delivered in the system information.
(2) The process of neighboring cell measurement performed by a terminal in connected mode mainly includes steps such as measurement delivery, measurement result generation, and measurement result reporting. Measurement delivery refers to the source base station sending the measurement configuration information to the UE, which is generally transmitted through an RRCReconfiguration message. The UE performs the relevant measurements based on the measurement configuration information and then reports the measurement results to the gNodeB through a measurement report. The measurement configuration information includes the measurement object (including SSB frequency, SSB subcarrier spacing, SMTC configuration (SSB-based measurement timing configuration), whitelist and blacklist cells, etc.), measurement gap (a time period during which the UE leaves the current frequency to measure other frequencies, which is only involved in inter-frequency and inter-RAT measurements), reporting configuration (the method of triggering measurement reports and the format of measurement reports), triggering quantity (how event reporting is triggered), and measurement ID (which combines the measurement object and reporting configuration). The UE performs measurements based on the measurement configuration information delivered by the gNodeB and reports the measurement results once the conditions are met. Regardless of the measurement method mentioned above, the SMTC configuration can be based on the frequency or on different cells within the frequency.

Generally, two NR base stations can exchange the SMTC configurations of their serving cells and/or neighboring cells over the Xn interface. The timing of the SMTC received by the source base station from the neighboring base station is based on the timing of the neighboring base station's cell. For example, when base station A sends SMTC to base station B, the timing of the SMTC is based on the timing of base station A's cell, and when base station B sends SMTC to base station A, the timing of the SMTC is based on the timing of base station B's cell. The source base station configures the SMTC for the UEs it serves to measure neighboring cells based on the timing of the source cell. Therefore, the source cell needs to convert the SMTC received from the neighboring base station over the Xn interface into an SMTC based on the timing of the source cell for configuration to the UEs. When the two NR base stations are synchronized, the timing of the neighboring cell of the neighboring base station is consistent with the timing of the source base station. When the two NR base stations are not synchronized, the frame boundary difference (SFN and Frame Timing Difference, SFTD) between the two base stations needs to be known in order to convert the SMTC. It should be noted that the SMTC configured by the source base station for the UEs it serves to measure neighboring cells may consider the SMTC required for measuring multiple neighboring cells. For example, the source base station may obtain a new SMTC configuration based on the SMTC configurations received from multiple neighboring cells, and the source base station sends this new SMTC configuration to the UEs to perform measurements on multiple neighboring cells.

The terminal may report the SFN and frame timing difference (SFN and frame timing difference, SFTD) between the PCell and the NR cell. Correspondingly, the base station may configure the terminal to measure the SFTD between the PCell and the NR cell (including neighboring NR cells and NR PSCELLs, etc.).

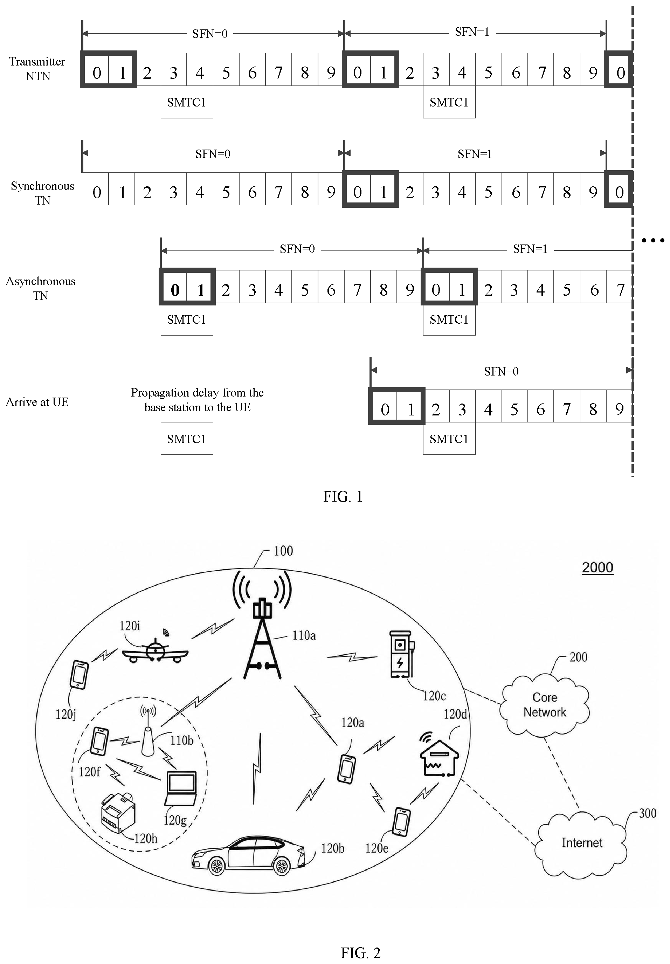

The following uses base stations of non-terrestrial network (NTN) and terrestrial network (TN) as examples to introduce the concepts of timing and synchronization involved in the embodiments of this application:
As shown in FIG. 1, if the boundaries of the frame numbers and subframe numbers of two inter-site cells are aligned, it can be considered that the two cells are synchronized.

The NTN cell in the first row and the TN cell in the second row in FIG. 1 are synchronized; the NTN cell in the first row, the TN cell in the second row, and the TN cell in the third row are asynchronous. The bolded boxes indicate the positions where the SSB of the cell is located, and the boxes below each row represent SMTC.

The following will illustrate the configuration of SMTC1 used to indicate the UE to measure the time domain position of the SSB of a neighboring cell, using the NTN cell as the timing reference, using an asynchronous TN cell as the timing reference, and from the perspective of the UE, respectively:
Using the timing of the NTN cell transmitter as a reference: From the perspective of the NTN cell transmitter, the measurement window is calculated based on the frame number and subframe number of the source cell (equivalent to the serving cell in the following solutions of this application).

Using the timing of the neighboring cell as a reference: From the perspective of the transmitter of the neighboring cell, the measurement window is calculated based on the frame number and subframe number of the neighboring cell.

Using the timing of the UE as a reference: The measurement window is calculated based on the frame number and subframe number of the serving cell received by the UE.

For example, as shown in FIG. 1, the SSB sent by the asynchronous TN cell is on subframes 0 and 1 in the first half frame of the asynchronous TN cell. Therefore, if the timing of the asynchronous TN cell is used as a reference, the offset of the SMTC1 may be 0, and the duration may be 2 subframes. The SMTC may be sent to the NTN cell through the Xn interface. The NTN cell learns that the SFTD between the NTN cell and the asynchronous TN cell is 3 subframes (see the first row and the third row in FIG. 1). Therefore, the offset of the SMTC1 calculated based on the timing of the NTN cell is 3, and the duration is 2 subframes. When the propagation delay between the UE and the NTN cell is 0 or approximately 0, the NTN cell may directly configure the offset of the SMTC1 for the UE to be 3 and the duration to be 2 subframes. However, when the propagation delay between the UE and the NTN cell cannot be ignored (for example, when the propagation delay is relatively large), the NTN cell (equivalent to the serving cell of the UE) needs to consider the propagation delay between the UE and the NTN cell when configuring the SMTC1 to be delivered to the UE. Assuming that the propagation delay between the UE and the NTN cell is 11 subframes, the NTN cell configures the offset of the SMTC1 for the UE to be 2 and the duration to be 2 subframes. In the foregoing example, it is assumed that the propagation delay from the asynchronous TN cell to the UE is 0.

In the embodiments of this application, if the serving cell is an NTN cell, due to the large coverage area of the NTN network, which generally ranges from tens to hundreds of kilometers, the transmission delay from the NTN network to the UE is significant. Therefore, when configuring SMTC for the UE, the propagation delay between the UE and the serving cell needs to be additionally considered. When configuring SMTC, the serving cell may also consider the propagation delay from the UE to the NTN network, although this delay can alternatively be considered as zero.

However, when there is no Xn interface between two base stations (for example, there is no Xn interface between an NTN base station and a TN base station), the base stations cannot exchange their respective SMTCs. This would prevent the source base station from delivering an accurate SMTC for the served terminal device to measure neighboring cells or adjacent frequency points, thereby failing to ensure the accuracy of SSB measurement performed by the terminal device.

In view of the aforementioned issues, this application proposes a measurement configuration method, wherein an access network device can effectively configure an accurate timing configuration for a reference signal used to measure a neighboring cell for a served terminal device, thereby improving the measurement efficiency of the terminal device and reducing the measurement power of the terminal device.

The method provided in the embodiments of this application may be applied to a 4th generation (4th generation, 4G) communication system, for example, a long term evolution (long term evolution, LTE) communication system, or may be applied to a 5th generation (5th generation, 5G) communication system, for example, a 5G New Radio (new radio, NR) communication system, or may be applied to various future communication systems, for example, a 6th generation (6th generation, 6G) communication system. The method provided in the embodiments of this application may be further applied to a narrowband Internet of Things (narrow band- internet of things, NB-IoT) system. The method provided in the embodiments of this application may be further applied to a satellite communication system, wherein the satellite communication system may be integrated with the foregoing communication systems. Certainly, the technical solutions in the embodiments of this application may also be applied to other communication systems, provided that the communication systems have a measurement requirement. In addition, the communication system may be applicable to future-oriented communication technologies. The system described in the embodiments of this application is intended to describe the technical solutions in the embodiments of this application more clearly, and does not constitute a limitation on the technical solutions provided in the embodiments of this application. A person of ordinary skill in the art may know that with evolution of a network architecture, the technical solutions provided in the embodiments of this application are also applicable to similar technical problems.

FIG. 2 shows a possible and non-limiting communication system architecture to which an embodiment of this application is applicable. As shown in FIG. 2, the communication system 2000 includes a radio access network (radio access network, RAN) 100 and a core network (core network, CN) 200. Optionally, the communication system 2000 may further include an Internet 300. The RAN 100 includes at least one access network device (for example, 110a and 110b in FIG. 2, collectively referred to as 110) and at least one terminal device (for example, 120a to 120j in FIG. 2, collectively referred to as 120). The RAN 100 may further include other RAN nodes, for example, a wireless relay device and/or a wireless backhaul device (not shown in FIG. 2). The terminal device 120 is wirelessly connected to the access network device. The access network device is connected to the core network 200 in a wireless or wired manner. The core network device in the core network 200 and the access network device may be different physical devices, or may be a same physical device integrating logical functions of the core network and logical functions of the radio access network.

The RAN 100 may be a 3GPP-related cellular system, such as a 4G, 5G mobile communication system, or an evolved system after 5G (e.g., a 6G mobile communication system). The RAN 100 may also be an open access network (open RAN, O-RAN, or ORAN), a cloud radio access network (cloud radio access network, CRAN), or a WiFi system. The RAN 100 may further be a communication system that integrates two or more of the above-mentioned systems.

It is understandable that FIG. 2 merely illustrates a possible communication system architecture to which the embodiments of this application may be applied. In other possible scenarios, the communication system architecture may also include other devices.

The access network device is a node in a radio access network (radio access network, RAN), which may also be referred to as an access network device or a RAN node (or device). The access network device is configured to assist a terminal device in achieving wireless access. The multiple access network devices in the communication system 2000 may be nodes of the same type, or may be nodes of different types. In some scenarios, the roles of the access network device and the terminal device 120 are relative to each other. For example, in FIG. 2, network element 120i may be a helicopter or an unmanned aerial vehicle (UAV), which may be configured as a mobile base station. For the terminal device 120j that accesses the RAN 100 through the network element 120i, the network element 120i functions as a base station; however, for the base station 110a, the network element 120i functions as a terminal device. The access network device and the terminal device 120 are sometimes collectively referred to as communication apparatuses. For instance, the network elements 110a and 110b in FIG. 2 may be understood as communication apparatuses with base station functions, while the network elements 120a-120j may be understood as communication apparatuses with terminal device functions.

In a possible scenario, the access network device may be a base station (base station), an evolved NodeB (evolved NodeB, eNodeB), a transmission and receiving point (transmitting and receiving point, TRP), a transmission point (transmitting point, TP), a next generation NodeB (next generation NodeB, gNB), a next generation base station in a sixth generation (6th generation, 6G) mobile communication system, a base station in a future mobile communication system, a satellite, an access point (access point, AP) or an integrated access and backhaul (integrated access and backhaul, IAB) node in a WiFi system, an access network device in a non-terrestrial network (non-terrestrial network, NTN) communication system of a mobile switching center, which may be deployed in high-altitude platforms or satellites, or the like. The access network device may be a macro base station (for example, 110a in FIG. 2), a micro base station or an indoor station (for example, 110b in FIG. 2), a relay node or a donor node, or a radio controller in a CRAN scenario. The access network device may alternatively be a device that functions as a base station in device-to-device (device to device, D2D) communication, internet of vehicles communication, unmanned aerial vehicle communication, or machine-type communication. Optionally, the access network device may alternatively be a server, a wearable device, a vehicle, a vehicle-mounted device, or the like. For example, the access network device in the vehicle to everything (vehicle to everything, V2X) technology may be a road side unit (road side unit, RSU).

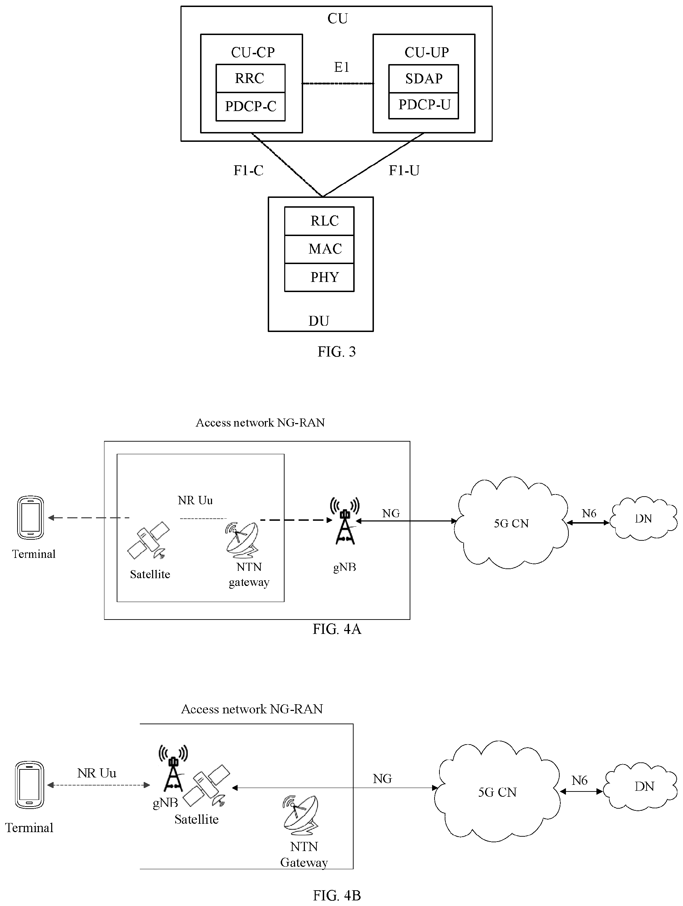

In addition, in a certain network architecture, the access network device may include a centralized unit (centralized unit, CU) node, a distributed unit (distributed unit, DU) node, or include both a CU node and a DU node. A RAN device that includes both a CU node and a DU node splits the protocol layers of the gNB in the NR system, wherein some functions of the protocol layers are centrally controlled by the CU, and the remaining or all functions of the protocol layers are distributed in the DU, with the CU centrally controlling the DU, as shown in FIG. 3. Further, the CU may be further divided into a control plane (CU-CP) and a user plane (CU-UP). The CU-CP is responsible for control plane functions, mainly including radio resource control (radio resource control, RRC) and the packet data convergence protocol (packet data convergence protocol, PDCP) corresponding to the control plane (i.e., PDCP-C). PDCP-C is mainly responsible for encryption and decryption, integrity protection, and data transmission of control plane data. The CU-UP is responsible for user plane functions, mainly including the service data adaptation protocol (service data adaptation protocol, SDAP) and the PDCP corresponding to the user plane (i.e., PDCP-U). The SDAP is mainly responsible for processing data from the core network and mapping flows (flow) to bearers. The PDCP-U is mainly responsible for encryption and decryption, integrity protection, header compression, sequence number maintenance, and data transmission on the data plane. The CU-CP and the CU-UP are connected through an E1 interface. The CU-CP represents the gNB and is connected to the core network through an NG interface, and is connected to the DU through the F1 interface for the control plane (i.e., F1-C). The CU-UP is connected to the DU through the F1 interface for the user plane (i.e., F1-U). Of course, there is also a possible implementation where the PDCP-C is also located in the CU-UP.

It may be understood that CUs (including the CU-CP or the CU-UP) or DUs may have different names in different systems, but a person skilled in the art can understand their meanings. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, this application uses the CU, the CU-CP, the CU-UP, and the DU as examples for description. Any one of the CU (or the CU-CP and the CU-UP), the DU, and the RU in this application may be implemented by using a software module, a hardware module, or a combination of a software module and a hardware module.

In the embodiments of this application, a form of the access network device is not limited. An apparatus configured to implement a function of the access network device may be an access network device, or may be an apparatus that can support the access network device in implementing the function, for example, a chip system. The apparatus may be installed in the access network device or used in a matching manner with the access network device.

The terminal device 120 may also be referred to as a terminal, user equipment (user equipment, UE), mobile station (mobile station, MS), mobile terminal (mobile terminal, MT), or the like, or may be a device configured to provide voice or data connectivity to a user, or may be an Internet of Things (IoT) device. For example, the terminal device includes handheld devices, vehicle-mounted devices, and the like that have wireless connection capabilities. Currently, the terminal device may be a mobile phone, a tablet computer, a notebook computer, a palmtop computer, a mobile internet device (mobile internet device, MID), a wearable device (e.g., a smartwatch, a smart band, a pedometer, etc.), a vehicle-mounted device (e.g., an automobile, a bicycle, an electric vehicle, an airplane, a ship, a train, a high-speed train, etc.), a satellite terminal, a virtual reality (virtual reality, VR) device, an augmented reality (augmented reality, AR) device, an intelligent point of sale (point of sale, POS) device, a customer-premises equipment (customer-premises equipment, CPE), a wireless terminal in industrial control, a smart home device (e.g., a refrigerator, a television, an air conditioner, an electricity meter, etc.), an intelligent robot, an industrial robot, an arm, a workshop device, a wireless terminal in autonomous driving, a wireless terminal in telemedicine, a wireless terminal in a smart grid (smart grid), a wireless terminal in transportation security, a wireless terminal in a smart city, a wireless terminal in a smart home, a flight device (e.g., an intelligent robot, a hot air balloon, an unmanned aerial vehicle, an airplane), or the like. The terminal device may also be another device with a terminal function, for example, the terminal device may also be a device that serves as a terminal in D2D communication.

The access network device and the terminal device may be fixed or may be movable. The access network device and the terminal device may be deployed on land, including indoor or outdoor, handheld, or vehicle-mounted; or may be deployed on a water surface; or may be deployed on an airplane, a balloon, or a satellite in the air. This is not limited in this embodiment of this application. In addition, the access network device and the terminal device, the access network device and the access network device, and the terminal device and the terminal device may communicate with each other by using a licensed spectrum, or may communicate with each other by using an unlicensed spectrum, or may communicate with each other by using both a licensed spectrum and an unlicensed spectrum. The access network device and the terminal device may communicate with each other by using a spectrum below 6 gigahertz (gigahertz, GHz), or may communicate with each other by using a spectrum above 6 GHz, or may communicate with each other by using both a spectrum below 6 GHz and a spectrum above 6 GHz at the same time. A spectrum resource used for wireless communication is not limited in embodiments of this application.

Core network devices refer to devices in the core network that provide service support for terminal devices. Currently, some examples of core network devices include an access and mobility management function (access and mobility management function, AMF) entity, a session management function (session management function, SMF) entity, a user plane function (user plane function, UPF) entity, and the like, which are not exhaustively listed herein. Among them, the AMF entity may be responsible for access and mobility management in a mobile network, such as registration management, connection management, and reachability management of a user. Specific functions include non-access stratum signaling termination, registration area management, access authentication, and the like. The SMF entity may be responsible for session management, such as session establishment of a user; the UPF entity may be a user plane function entity, mainly responsible for connecting to an external network. In this application, an "entity" may also be referred to as a network element or a functional entity. For example, the AMF entity may also be referred to as an AMF network element or an AMF functional entity, or the SMF entity may also be referred to as an SMF network element or an SMF functional entity, and the like.

In the embodiments of this application, the functions of the access network device may also be performed by a module (such as a chip) in the access network device, or may be performed by a control subsystem that includes the functions of the access network device. The control subsystem that includes the functions of the access network device herein may be a control center in the foregoing application scenarios such as smart grid, industrial control, intelligent transportation, or smart city. The functions of the terminal device may also be performed by a module (such as a chip or a modem) in the terminal device, or may be performed by an apparatus that includes the functions of the terminal device.

Based on the system architecture shown in FIG. 2, the communication method provided in the embodiments of this application may be applied to an NTN communication system. The NTN communication system may include non-terrestrial network devices such as an unmanned aerial vehicle (UAV), a high altitude platform station (high altitude platform station, HAPS), and a satellite for networking, and provide services such as data transmission and voice communication for terminal devices. In addition, the NTN system may further include other non-terrestrial network devices. This is not limited in this application.

The NTN communication system may further support various mobile communication systems, for example, another communication system such as a New Radio (new radio, NR) system, a long term evolution (long term evolution, LTE) system, or a future communication system. Specifically, this is not limited herein.

In NTN communication, the NTN device may have two working modes: a transparent (transparent) mode and a regenerative (regenerative) mode. Based on the working mode of the NTN device, the architecture of NTN communication may be classified into the following two types: First, a transparent forwarding (transparent) architecture, wherein the NTN device may be a relay (relay) or an amplifier, and may perform radio frequency filtering, amplification, and the like, to regenerate a physical layer signal. The NTN device may be responsible for layer 1 (layer 1, L1) relay, and is used for physical layer forwarding, while being invisible to higher layers. Second, a regenerative (regenerative) architecture, wherein the NTN device has a processing function of an access network device. For example, in the regenerative working mode, a regenerative satellite may be further divided into a regenerative satellite without an inter-satellite link, that is, there is no inter-satellite link (inter-satellite link, ISL) between satellites; or a regenerative satellite with an inter-satellite link, that is, there is an interface between satellites for directly exchanging data, wherein the inter-satellite link is an Xn interface; or a regenerative satellite with a processing function of a distributed unit (distributed unit, DU) of an access network device, wherein the satellite functions as a DU in this scenario.

For example, FIG. 4A illustrates a schematic diagram of an NTN communication architecture to which an embodiment of this application is applicable, wherein the NTN scenario may be a transparent satellite communication architecture. In the communication architecture shown in FIG. 4A, a terminal device may communicate with a 5G core network (core network, CN) through an access network, and then connect to a data network (data network, DN) via the 5G CN. The satellite and the NTN gateway (gateway) may serve as relay devices between the terminal device and the access network device, or function as a remote radio unit (remote radio unit, RRU) of the access network device.

The role of a satellite is to perform radio frequency filtering (Radio Frequency filtering), frequency conversion and amplification (Frequency conversion and amplification), meaning that the satellite primarily acts as an L1 relay, regenerating the physical layer signal, and does not handle higher protocol layers. In the transparent satellite communication architecture, the link between the satellite and the terminal device is referred to as the service link, while the link between the satellite and the NTN gateway or base station can be called the feeder link.

For example, FIG. 4B illustrates another NTN communication architecture to which the embodiments of this application are applicable, which may be a regenerative communication architecture. In the communication architecture shown in FIG. 4B, a satellite may function as an access network device, forming an access network together with an NTN gateway, and communicates with a core network through the NTN gateway. Additionally, the satellite may also provide wireless access services for terminal devices. FIG. 4B exemplarily shows a regenerative satellite architecture without an inter-satellite link, wherein the satellite has the processing function of a base station, Regenerative satellite without ISL, gNB processed payload. Here, ISL refers to the inter-satellite link (inter-satellite link), and in this architecture, the satellite acts as a base station.

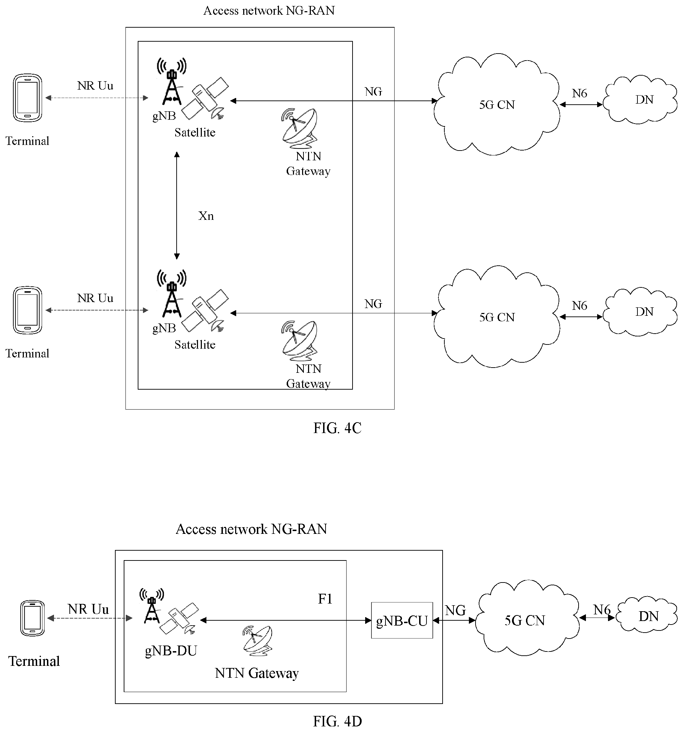

For example, FIG. 4C illustrates yet another NTN communication architecture applicable to an embodiment of this application, which features a regenerative satellite with an inter-satellite link (ISL) and a processing function of a base station, Regenerative satellite with ISL, gNB processed payload. In this scenario, the satellite also functions as a base station, and an inter-satellite link (ISL) exists between the satellites. In the regenerative architecture, the link between the satellite and the terminal device is referred to as a service link, while the link between the satellite and the NTN gateway may be referred to as a feeder link.

For example, FIG. 4D illustrates yet another NTN communication architecture applicable to the embodiments of this application, which features a regenerative satellite (NG-RAN with a regenerative satellite based on gNB-DU) that performs the DU processing functions of a base station; in this scenario, the satellite acts as a DU.

In addition, the embodiments of this application may also be applicable to scenarios involving a base station (gNB processed payload based on relay-like architectures) with integrated access and backhaul (IAB) functions, wherein the satellite serves as integrated access and backhaul (integrated access and backhaul, IAB). However, this scenario requires further research, and no structural diagram is provided herein.

It should be noted that FIG. 4A, 4B, 4C, and 4D illustrate only one satellite and one NTN gateway. In actual use, an architecture with multiple satellites and/or multiple NTN gateways may be adopted according to the requirements. Each satellite may provide services to one or more terminal devices, each NTN gateway may correspond to one or more satellites, and each satellite may correspond to one or more NTN gateways. This is not specifically limited in the embodiments of this application. In addition, FIG. 4A, 4B, 4C, and 4D are merely examples of an NTN communication architecture. The NTN communication architecture may further include other specific devices, which is not limited in this application.

The network architecture and service scenarios described in the embodiments of this application are intended to describe the technical solutions in the embodiments of this application more clearly, and do not constitute a limitation on the technical solutions provided in the embodiments of this application. A person of ordinary skill in the art may learn that, with evolution of the network architecture and emergence of new service scenarios, the technical solutions provided in the embodiments of this application are also applicable to similar technical problems.

In this application, names of messages in the following procedures are merely examples. With evolution of communications technologies, names of the information/messages in the following procedures may change. However, regardless of how the names change, as long as the names have the same meaning as functions or meanings of the messages in this application, the messages fall within the protection scope of this application. For example, the first configuration information or the second configuration information in this application may also be replaced with SMTC information.

The technical solutions of this application are described below with reference to specific embodiments.

An embodiment of this application provides a measurement configuration method. The method may be applicable to, but is not limited to, the communication system shown in FIG. 2, and may be applicable to, but is not limited to, a specific communication scenario in FIG. 4A, FIG. 4B, FIG. 4C, and FIG. 4D. The method may be performed by a terminal device or an access network device; or the method may be performed by a component (a module, a chip, or the like) corresponding to the terminal device or the access network device; or the method may be performed by an apparatus used in a manner corresponding to the terminal device or the access network device. It may be understood that this application does not specifically limit a specific structure of an execution body of the method provided in the embodiments of this application or a quantity of the execution bodies, provided that a program that records code of the method provided in the embodiments of this application can be run to perform communication according to the method provided in the embodiments of this application. The following uses an interaction between a first terminal device and a first access network device as an example for description. The sequence of the steps in the following procedures is merely an example. In actual application, the steps in the procedures may be performed in different orders.

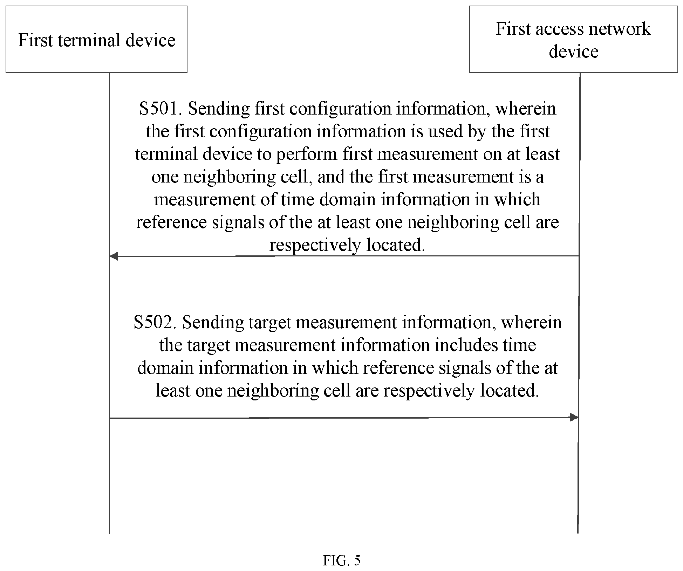

Referring to FIG. 5, a specific procedure of the method is as follows:
S501: The first access network device sends first configuration information to the first terminal device, wherein the first configuration information is used by the first terminal device to perform a first measurement on at least one neighboring cell, and the first measurement is measuring time domain information in which reference signals of the at least one neighboring cell are respectively located. Correspondingly, the first terminal device receives the first configuration information.

In a possible implementation, the first configuration information includes information about at least one neighboring cell and/or information about neighboring frequencies corresponding to the at least one neighboring cell; and the first configuration information is used to indicate the first terminal device to report target measurement information obtained by performing the first measurement on the at least one neighboring cell and/or the neighboring frequencies corresponding to the at least one neighboring cell.

In this embodiment of this application, the at least one neighboring cell may be a cell served by an access network device adjacent to the first access network device. The information about the neighboring cell may be identification information (for example, a physical cell identifier (physical cell identifier, PCI)) of the neighboring cell or location information of the neighboring cell, and the information about the frequency of the neighboring cell may be identification information of the frequency or a frequency value, which is not limited.

S502. The first terminal device sends target measurement information to the first access network device, wherein the target measurement information includes time domain information in which the reference signals of the at least one neighboring cell are respectively located. Correspondingly, the first access network device receives the target measurement information.

In a possible implementation, the method further includes: sending, by the first terminal device, one or more of the following to the first access network device:
a timing difference between a timing of receiving a reference signal of a serving cell by the first terminal device and a timing of sending a reference signal by each of the at least one neighboring cell , a first propagation delay from the first terminal device to a serving cell of the first terminal device, a propagation delay from the first terminal device to each of the at least one neighboring cell, or a first propagation delay difference corresponding to the at least one neighboring cell; wherein the first propagation delay difference corresponding to each neighboring cell is a difference between a propagation delay from the first terminal device to a corresponding neighboring cell and the first propagation delay.

For example, a neighboring cell of the UE1 includes a cell 1 and a cell 2. After performing the first measurement, the UE1 sends the target measurement information to the serving base station (equivalent to the first access network device). The target measurement information includes time domain information in which a reference signal of the cell 1 is located and time domain information in which a reference signal of the cell 2 is located. The UE1 may further send, to the serving base station, a difference 1 (which may be referred to as a timing difference 1) between a timing of receiving the reference signal of the serving base station 1 by the UE1 (for example, a timing of a reference signal of a current serving cell of the UE1) and a timing of receiving the reference signal of the cell 1 by the UE1, and a difference 2 (which may be referred to as a timing difference 2) between the timing of receiving the reference signal of the serving base station 1 by the UE1 and a timing of receiving the reference signal of the cell 2 by the UE1. The UE 1 may further send a propagation delay 1 from the UE1 to the serving base station, a propagation delay 2 from the UE1 to the cell 1, and a propagation delay 3 from the UE1 to the cell 2 The UE1 may also send a difference between propagation delay 1 and propagation delay 2 (which may be referred to as a propagation delay difference corresponding to cell 1), and a difference between propagation delay 1 and propagation delay 3 (which may be referred to as a propagation delay difference corresponding to the cell 2).

Optionally, in S502, when the first terminal device reports the first propagation delay from the first terminal device to the serving cell of the first terminal device, the propagation delay from the first terminal device to each of the at least one neighboring cell, and the first propagation delay difference corresponding to the at least one neighboring cell. When the serving cell or the neighboring cell is an NTN cell in a transparent transmission mode, the propagation delay may include a delay of a feeder link, or may not include a delay of the feeder link; and the propagation delay difference may include a delay difference of the feeder link, or may not include a delay difference of the feeder link.

Optionally, the target measurement information may alternatively be new time domain information obtained by the first terminal device based on the time domain information in which the reference signals of the at least one neighboring cell are respectively located.

In a possible implementation, the method in this embodiment of this application further includes: the first access network device determines, based on the target measurement information, second configuration information for a target terminal device served by the first access network device, wherein the second configuration information is used to indicate a timing configuration for the target terminal device to perform a measurement on the reference signals of the at least one neighboring cell, and the target terminal device includes the first terminal device; and then, the first access network device sends the second configuration information to the target terminal device. For example, the reference signal is a synchronization signal/physical broadcast channel block SSB. In this case, the timing configuration may be a timing configuration SMTC for SSB measurement.

In this embodiment of this application, the first terminal device sends the target measurement information to the first access network device, so that the first access network device determines, based on the target measurement information, the timing configuration for the target terminal device to perform a measurement on the reference signals of the at least one neighboring cell may include but is not limited to the following implementations:
Implementation 1: Using the first neighboring cell as an example, the first neighboring cell is any one of the at least one neighboring cell, and the first terminal device sends, to the first access network device, the time domain information in which the reference signal of the first neighboring cell is located, wherein the time domain information is slot information in which the reference signal of the first neighboring cell is located. There may be but is not limited to the following several cases for the timing of the time domain information in which the reference signal of the first neighboring cell is located:
Case 1: The time domain information, in which the reference signal of the first neighboring cell is located, is first slot information using a timing (equivalent to the timing of the UE in the foregoing FIG. 1) of receiving the downlink reference signal of the serving cell by the first terminal device as a reference.

In a possible implementation, for the foregoing case 1 (that is, when the target measurement information includes the first slot information), the target measurement information may further include at least one of the following: a period of the reference signal of the first neighboring cell, a quantity of reference signals, a type of the reference signal, an identifier ID of the first neighboring cell, or a subcarrier spacing of the reference signal.

For case 1: The first access network device may determine, based on the target measurement information, the timing configuration performed by the first terminal device on the first neighboring cell. The first access network device does not need to consider the propagation delay difference or the propagation delay difference value of the first terminal device.

In a possible implementation, if the target terminal device further includes the second terminal device, the method may further include: the first access network device may determine, based on the target measurement information, a timing configuration for the second terminal device to perform a measurement on the reference signal of the first neighboring cell. The second terminal device may be another terminal device served by the first access network device.

The first access network device may determine, based on the target measurement information, the timing configuration for the second terminal device to perform a measurement on the reference signal of the first neighboring cell, which may be implemented in the following ways:
Manner 1: The first access network device obtains a second propagation delay of the second terminal device, wherein the second propagation delay is a propagation delay of the second terminal device to the serving cell; and the first access network device may determine, based on the target measurement information, the first propagation delay, and the second propagation delay, the timing configuration for the second terminal device to perform a measurement on the reference signal of the first neighboring cell.

Manner 1 considers a case where the serving cell is a non-terrestrial network (NTN) cell and the first neighboring cell is a terrestrial network (TN) cell. In this case, the first terminal device and the second terminal device are at a relatively large distance from the serving cell, and the propagation delay is relatively large; while the first terminal device and the second terminal device are at a relatively small distance from the first neighboring cell, and the propagation delay is relatively small and can be ignored. Therefore, the first access network device needs to consider the propagation delay from the first terminal device to the serving cell and the propagation delay from the second terminal device to the serving cell to determine or configure the timing configuration for the second terminal device to measure the reference signal of the first neighboring cell. The following several cases of manner 1 are similar.

Manner 2: The first access network device obtains a fourth propagation delay of the second terminal device, wherein the fourth propagation delay is a propagation delay from the second terminal device to the first neighboring cell; and the first access network device may determine the timing configuration for the second terminal device to measure the reference signal of the first neighboring cell based on the target measurement information, the fourth propagation delay, and the propagation delay (namely, the third propagation delay) from the first terminal device to the first neighboring cell.

Manner 2 considers a case where the serving cell is a terrestrial network (TN) cell, and the first neighboring cell is a non-terrestrial network (NTN) cell. In this case, the first terminal device and the second terminal device are at a relatively large distance from the first neighboring cell, and the propagation delay is relatively large; while the first terminal device and the second terminal device are at a relatively small distance from the serving cell, and the propagation delay is relatively small and can be ignored. Therefore, the first access network device needs to consider the propagation delay from the first terminal device to the first neighboring cell and the propagation delay from the second terminal device to the first neighboring cell to determine or configure the timing configuration for the second terminal device to measure the reference signal of the first neighboring cell. The following several cases of manner 2 are similar.

Manner 3: The first access network device obtains a second propagation delay difference of the second terminal device, wherein the second propagation delay difference is a difference between the propagation delay from the second terminal device to the serving cell and the propagation delay from the second terminal device to the first neighboring cell (that is, the difference between the second propagation delay and the fourth propagation delay mentioned above);

The first access network device may determine the timing configuration for the second terminal device to measure the reference signal of the first neighboring cell based on the target measurement information, the first propagation delay difference corresponding to the first neighboring cell (that is, the difference between the propagation delay from the first terminal device to the serving cell and the propagation delay from the first terminal device to the first neighboring cell), and the second propagation delay difference.

Manner 3 considers a case where both the serving cell and the first neighboring cell are non-terrestrial network (NTN) cells. In this case, the first access network device needs to determine or configure the timing configuration for the second terminal device to measure the reference signal of the first neighboring cell by considering the propagation delays from the first terminal device and the second terminal device to the serving cell and the first neighboring cell, respectively. Manner 3 in the following cases is similar.

It should be noted that, in addition to serving the first terminal device, the first access network device may also serve one or more other terminal devices. For any one of these terminal devices, the first access network device may implement the process of determining the timing configuration for the second terminal device to measure the reference signal of the first neighboring cell by referring to the manner used for the second terminal device, as described above. This is not described in detail herein one by one.

Optionally, in the embodiments of this application, when the first access network device determines the first propagation delay (or the third propagation delay), the second propagation delay (or the fourth propagation delay), or the first propagation delay difference/the second propagation delay difference used for the timing configuration for the terminal device to measure the reference signal of the first neighboring cell, if the serving cell or the neighboring cell is an NTN cell in the transparent transmission mode, the propagation delay may include a delay of a feeder link, or may not include a delay of the feeder link; and the propagation delay difference may include a delay difference of the feeder link, or may not include a delay difference of the feeder link.

Case 2: The time domain information, in which the reference signal of the first neighboring cell is located, is second slot information using a timing of sending a downlink reference signal by the first neighboring cell as a reference. The first neighboring cell is any one of the at least one neighboring cell.

In a possible implementation, for case 2, when the target measurement information includes the second slot information, the target measurement information may further include but is not limited to at least one of the following: a period of the reference signal of the first neighboring cell, third indication information, a quantity of reference signals, a pattern bitmap of the reference signal, a type of the reference signal, an identifier ID of the first neighboring cell, or a subcarrier spacing of the reference signal, wherein the third indication information is used to indicate that the reference signal of the first neighboring cell is located in a first half frame or a second half frame of a radio frame of the first neighboring cell.

For case 2, the first access network device may determine, based on the target measurement information, the timing configuration for the first terminal device to perform a measurement on the reference signal of the first neighboring cell, which may be implemented in the following manner:
Manner 1: The first access network device determines the timing configuration for the first terminal device to perform a measurement on the first neighboring cell based on the target measurement information, the first timing difference, and the first propagation delay (that is, the propagation delay from the first terminal device to the serving cell).
Manner 2: The first access network device determines the timing configuration for the first terminal device to perform a measurement on the first neighboring cell based on the target measurement information, the first timing difference, and the propagation delay (which may be referred to as a third propagation delay) from the first terminal device to the first neighboring cell.
Manner 3: The first access network device determines the timing configuration for the first terminal device to perform a measurement on the reference signal of the first neighboring cell based on the target measurement information, the first timing difference, and the first propagation delay difference.

In the foregoing, the first timing difference is a difference between a timing of receiving the reference signal from the serving cell by the first terminal device and a timing of receiving the reference signal from the first neighboring cell by the first terminal device, and the first propagation delay difference is a difference between a propagation delay (referred to as a third propagation delay) from the first terminal device to the access network device serving the first neighboring cell and the first propagation delay.

In a possible implementation, if the target terminal device further includes a second terminal device, the method may further include: the first access network device may determine, based on the target measurement information, a timing configuration for the second terminal device to measure the reference signal of the first neighboring cell. The second terminal device may be another terminal device served by the first access network device.

The first access network device may determine, based on the target measurement information, the timing configuration for the second terminal device to measure the reference signal of the first neighboring cell in the following manner:
Manner 1: The first access network device obtains a second propagation delay of the second terminal device, wherein the second propagation delay is a propagation delay from the second terminal device to the serving cell; and the first access network device determines the timing configuration for the second terminal device to measure the reference signal of the first neighboring cell based on the target measurement information, the first timing difference, and the second propagation delay.
Manner 2: The first access network device obtains a fourth propagation delay of the second terminal device, wherein the fourth propagation delay is a propagation delay from the second terminal device to the first neighboring cell; and the first access network device determines, based on the target measurement information, the first timing difference, and the fourth propagation delay, the timing configuration for the second terminal device to measure the reference signal of the first neighboring cell.
Manner 3: The first access network device obtains a second propagation delay difference of the second terminal device, wherein the second propagation delay difference is a difference between the propagation delay from the second terminal device to the serving cell and the propagation delay from the second terminal device to the first neighboring cell (that is, the difference between the second propagation delay and the fourth propagation delay mentioned above); and the first access network device determines, based on the target measurement information, the first timing difference, and the second propagation delay difference, a timing configuration for the first terminal device to measure the reference signal of the first neighboring cell.

Case 3: The time domain information, in which the reference signal of the first neighboring cell is located, is third slot information using a timing of sending a downlink reference signal by the serving cell of the first terminal device. The first neighboring cell is any one of the at least one neighboring cell.

In a possible implementation, for case 3, when the target measurement information includes the third slot information, the target measurement information may further include but is not limited to at least one of the following: a period of the reference signal of the first neighboring cell, a quantity of reference signals, a type of the reference signal, an identifier ID of the first neighboring cell, or a subcarrier spacing of the reference signal.

For case 3: The first access network device may determine, based on the target measurement information, the timing configuration for the first terminal device to perform a measurement on the reference signal of the first neighboring cell in the following manner:
Manner 1: The first access network device determines the timing configuration for the first terminal device to perform a measurement on the reference signal of the first neighboring cell based on the target measurement information and the first propagation delay.
Manner 2: The first access network device determines, based on the target measurement information and the propagation delay (that is, the third propagation delay) from the first terminal device to the first neighboring cell, the timing configuration for the first terminal device to perform a measurement on the reference signal of the first neighboring cell.
Manner 3: The first access network device determines, based on the target measurement information and the first propagation delay difference (that is, the difference between the first propagation delay and the third propagation delay), the timing configuration for the first terminal device to perform a measurement on the reference signal of the first neighboring cell.

In a possible implementation, if the target terminal device further includes a second terminal device, the method may further include: the first access network device may determine, based on the target measurement information, a timing configuration for the second terminal device to perform a measurement on the first neighboring cell. The second terminal device may be another terminal device served by the first access network device.

The first access network device may determine, based on the target measurement information, the timing configuration for the second terminal device to perform a measurement on the reference signal of the first neighboring cell in the following manner:
Manner 1: The first access network device obtains a second propagation delay of the second terminal device, wherein the second propagation delay is a propagation delay from the second terminal device to the serving cell; and the first access network device determines, based on the target measurement information and the second propagation delay, the timing configuration for the second terminal device to perform a measurement on the reference signal of the first neighboring cell.
Manner 2: The first access network device obtains a fourth propagation delay of the second terminal device, wherein the fourth propagation delay is a propagation delay from the second terminal device to the first neighboring cell; and the first access network device determines, based on the target measurement information and the fourth propagation delay, the timing configuration for the second terminal device to perform a measurement on the reference signal of the first neighboring cell.
Manner 3: The first access network device obtains a second propagation delay difference (that is, a difference between the second propagation delay and the fourth propagation delay) of the second terminal device, wherein the second propagation delay difference is a difference between the propagation delay from the second terminal device to the serving cell and the propagation delay from the second terminal device to the first neighboring cell; and the first access network device determines, based on the target measurement information and the second propagation delay difference, the timing configuration for the second terminal device to perform a measurement on the reference signal of the first neighboring cell.

Implementation 2: Using the first neighboring cell as an example, wherein the first neighboring cell is any one of the at least one neighboring cell, and the time domain information, in which the reference signal of the first neighboring cell, sent by the first terminal device to the first access network device, is located, is time window information of the reference signal of the first neighboring cell. There may be the following (but not limited to) several cases for the timing of the time window information of the reference signal of the first neighboring cell:
Case 1: The time domain information in which the reference signal of the first neighboring cell is located, is first time window information using a timing of receiving the downlink reference signal of the serving cell by the first terminal device as a reference. The first time window information may include but is not limited to at least one of a length of the time window, a period of the time window, or an offset of the time window.

In case 1, the first access network device may determine, based on the first time window information using the timing of receiving the downlink reference signal of the serving cell by the first terminal device as a reference, the timing configuration for the first terminal device to perform a measurement on the reference signal of the first neighboring cell. For example, the first access network device may use the first time window, using a timing of receiving the downlink reference signal of the serving cell by the first terminal device as a reference, as the timing configuration for the first terminal device to perform a measurement on the reference signal of the first neighboring cell.

In a possible implementation, if the target terminal device further includes a second terminal device, the method may further include: the first access network device may determine, based on the target measurement information, a timing configuration for the second terminal device to measure the reference signal of the first neighboring cell. The second terminal device may be another terminal device served by the first access network device.

The first access network device may determine, based on the target measurement information, the timing configuration for the second terminal device to measure the reference signal of the first neighboring cell in the following ways:
Manner 1: The first access network device obtains a second propagation delay (that is, a propagation delay from the second terminal device to the serving cell) of the second terminal device; and then determines, based on the first time window information, the first timing difference, and the second propagation delay, the timing configuration for the second terminal device to measure the reference signal of the first neighboring cell.
Manner 2: The first access network device obtains a fourth propagation delay (that is, a propagation delay from the second terminal device to the first neighboring cell) of the second terminal device; and then determines, based on the first time window information, the first timing difference, and the fourth propagation delay, the timing configuration for the second terminal device to measure the reference signal of the first neighboring cell.
Manner 3: The first access network device obtains the second propagation delay difference (the difference between the second propagation delay and the fourth propagation delay) of the second terminal device, and then determines the timing configuration for the second terminal device to perform a measurement on the reference signal of the first neighboring cell based on the first time window information, the first timing difference, and the second propagation delay difference.

In the foregoing, the first timing difference is a difference between a timing of receiving the reference signal of the serving cell by the first terminal device and a timing of receiving the reference signal of the first neighboring cell by the first terminal device.

Case 2: The time domain information, in which the reference signal of the first neighboring cell is located, is second time window information using a timing of sending a downlink reference signal by the first neighboring cell. The second time window information may include but is not limited to at least one of a length of the time window, a period of the time window, or an offset of the time window.

In case 2, the first access network device determines, based on the second time window information, the first propagation delay (that is, the propagation delay from the first terminal device to the serving cell), the third propagation delay (that is, the propagation delay from the first terminal device to the first neighboring cell), or the first propagation delay difference, the timing configuration for the first terminal device to perform a measurement on the reference signal of the first neighboring cell.

In a possible implementation, if the target terminal device further includes a second terminal device, the method may further include: the first access network device may determine, based on the target measurement information, a timing configuration for the second terminal device to measure the reference signal of the first neighboring cell. The second terminal device may be another terminal device served by the first access network device.

The first access network device may determine, based on the target measurement information, the timing configuration for the second terminal device to measure the reference signal of the first neighboring cell in the following manner:
Manner 1: The first access network device obtains a second propagation delay (that is, a propagation delay from the second terminal device to the serving cell) of the second terminal device; and the first access network device determines, based on the second time window information and the second propagation delay, the timing configuration for the second terminal device to measure the reference signal of the first neighboring cell.
Manner 2: The first access network device obtains a fourth propagation delay (that is, a propagation delay from the second terminal device to the first neighboring cell) of the second terminal device; and the first access network device determines, based on the second time window information and the fourth propagation delay, the timing configuration for the second terminal device to measure the reference signal of the first neighboring cell.
Manner 3: The first access network device obtains the second propagation delay difference (a difference between the second propagation delay and the fourth propagation delay) of the second terminal device; and the first access network device determines the timing configuration for the second terminal device to perform a measurement on the reference signal of the first neighboring cell based on the second time window information and the second propagation delay difference.

Case 3: The time domain information, in which the reference signal of the first neighboring cell is located, is third time window information using a timing of sending a downlink reference signal by the serving cell of the first terminal device as a reference. The third time window information includes one or more of the following: a length of the time window, a period of the time window, or an offset of the time window.

In case 3, the first access network device determines the timing configuration for the first terminal device to perform a measurement on the reference signal of the first neighboring cell based on the third time window information and the first propagation delay (that is, the propagation delay from the first terminal device to the serving cell) or the third propagation delay (that is, the propagation delay from the first terminal device to the first neighboring cell).

In a possible implementation, if the target terminal device further includes a second terminal device, the method may further include: the first access network device may determine, based on the target measurement information, a timing configuration for the second terminal device to measure the reference signal of the first neighboring cell. The second terminal device may be another terminal device served by the first access network device.

The first access network device may determine, based on the target measurement information, the timing configuration for the second terminal device to measure the reference signal of the first neighboring cell in the following ways:
Manner 1: The first access network device obtains a second propagation delay (that is, a propagation delay from the second terminal device to the serving cell) of the second terminal device, and then determines, based on the third time window information and the second propagation delay, the timing configuration for the second terminal device to measure the reference signal of the first neighboring cell.
Manner 2: The first access network device obtains a fourth propagation delay (that is, a propagation delay from the second terminal device to the first neighboring cell) of the second terminal device, and then determines, based on the third time window information and the fourth propagation delay, the timing configuration for the second terminal device to measure the reference signal of the first neighboring cell.
Manner 3: The first access network device obtains the second propagation delay difference (that is, the difference between the second propagation delay and the fourth propagation delay) of the second terminal device; and then determines the timing configuration for the second terminal device to perform a measurement on the reference signal of the first neighboring cell based on the third time window information and the second propagation delay difference.

The first neighboring cell is used as an example for description above. The first access network device may determine the timing configuration used by the served terminal device to measure the reference signals of other neighboring cells in accordance with the foregoing manner, and details are not described herein one by one.

In conclusion, according to the measurement configuration method provided in this embodiment of this application, the first access network device is an access network device serving the first terminal device. The method includes: the first terminal device may receive first configuration information from the first access network device, wherein the first configuration information is used by the first terminal device to perform first measurement on at least one neighboring cell, and the first measurement is measurement of time domain information in which reference signals of the at least one neighboring cell are respectively located; and then the first terminal device sends the target measurement information, which includes the time domain information in which the reference signals of the at least one neighboring cell are respectively located, to the first access network device; so that the first access network device may obtain the target measurement information through measurement performed by the first terminal device, and effectively and accurately configure, for each served terminal device (including the first terminal device), a timing configuration used to measure the reference signals of neighboring cells.

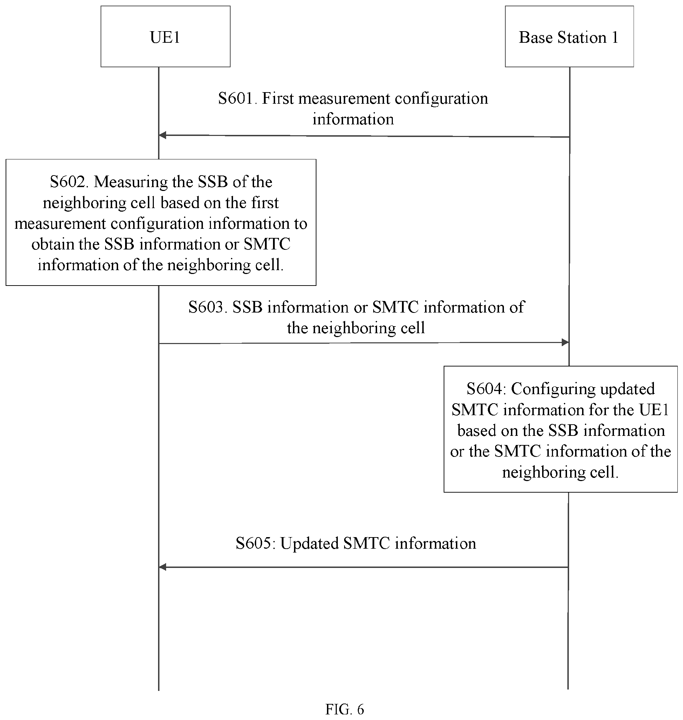

Based on the measurement configuration method described in the above-mentioned 5, the following further elaborates on the method through a specific implementation 1. In implementation 1, the first terminal device is illustrated using UE1 as an example, and the first access network device is illustrated using base station 1 of a non-terrestrial network as an example. Base station 1 serves UE1, and base station 1 configures the timing configuration information SMTC for UE1 to measure the SSB. Referring to FIG. 6, the specific procedure of this implementation 1 is as follows:
S601: Base station 1 sends first measurement configuration information to UE1, wherein the first measurement configuration information is used to indicate UE1 to report SSB information or SMTC information.

In Implementation Method 1, the base station 1 sends the first measurement configuration information to the UE1, which may include but is not limited to the following several implementation methods:
Implementation 1: The first measurement configuration information is used to indicate the UE1 to report the SSB information of a neighboring frequency or the SSB information of a neighboring cell.

In Implementation Method 1, when configuring the first measurement configuration information, base station 1 may include the following several configuration methods:
Method 1: The first measurement configuration information includes a measurement object and reporting configuration information, wherein the measurement object includes information about at least one adjacent frequency and/or information about at least one neighboring cell, and the reporting configuration information includes an indication for reporting SSB information.

For example, the first measurement configuration information includes information about frequency 1 and SMTC, wherein the first measurement configuration information is used to instruct UE1 to perform a measurement on the SSB received on frequency 1 based on the SMTC, and report the measured SSB information to base station 1.

For example, the first measurement configuration information includes information (such as an identifier of neighboring cell 1) and SMTC for neighboring cell 1, wherein the first measurement configuration information is used to indicate UE1 to perform a measurement on an SSB received from neighboring cell 1 based on the SMTC, and report the measured SSB information.

Method 2: The first measurement configuration information is existing measurement configuration information, wherein the first indication information is newly added to the existing measurement configuration information. The first indication information is used to indicate that when UE1 reports the measured information based on the existing measurement configuration information, the UE1 also reports the SSB information of the measured at least one adjacent frequency or the SSB information of the measured at least one neighboring cell.

For example, base station 1 sends measurement configuration information for the Synchronization Frame Time Difference (SFTD) to UE1. The measurement configuration information for the SFTD includes first indication information, which is used to indicate that when UE1 reports the measured SFTD information, it also reports the measured SSB information of at least one neighboring frequency or the SSB information of at least one neighboring cell.

In the embodiments of this application, the existing measurement configuration information may also be measurement configuration information for measurement events such as A3, A4, A5, and the like, and a specific measurement event is not limited.

Optionally, method 1 or method 2 is a measurement in a connected state. In the case of measurement in a connected state, the first measurement configuration information includes SMTC. Base station 1 may first configure the period of the SMTC to 5 ms, or the period may also be set to 5 ms. This ensures that after the UE1 measures the SSB of the neighboring cell and reports the SSB information of the neighboring cell, base station 1 can promptly update the SMTC based on the SSB information reported by the UE1.

Method 3: The first measurement configuration information is used to indicate UE1 to measure the SSB in an idle state or an inactive state, and after UE1 transitions from the idle state or the inactive state to the connected state, the measured SSB information is reported to base station 1.

For example, base station 1 adds second indication information to the measurement configuration information of the neighboring frequency point carried in the system information, wherein the second indication information is used to indicate UE1 to measure the SSB information of the neighboring cell or the neighboring frequency point.

Implementation 2: The first measurement configuration information is used to indicate the UE1 to report the SMTC information of a neighboring frequency or the SMTC information of a neighboring cell.

For example, the SMTC information includes one or more of the length of the SSB measurement window, the period of the SSB measurement window, and the offset. One or more of the period and the offset of the SSB measurement window may be used to determine the time domain start position of the SSB measurement window, and the time domain start position and the length of the SSB measurement window may be used to determine the time domain position of the SSB measurement window.

Manner 1: The first measurement configuration information includes a measurement object and reporting configuration information, wherein the measurement object includes information about at least one neighboring frequency and/or information about at least one neighboring cell, and the reporting configuration information includes indication for reporting an SSB measurement timing configuration (that is, SMTC).

For example, the first measurement configuration information includes information about the frequency 1 and the SMTC #1, and the first measurement configuration information is used to indicate the UE 1 to perform a measurement based on the SMTC #1 and the information about the frequency 1, and report the SMTC information of the frequency 1.

For example, the first measurement configuration information includes information (for example, an identifier of the neighboring cell) about the neighboring cell 1 and the SMTC #2, and the first measurement configuration information is used to insdicate the UE 1 to perform a measurement based on the SMTC #2 and the information about the neighboring cell 1, and report the SMTC information of the neighboring cell 1.

Manner 2: The first measurement configuration information is existing measurement configuration information, wherein the first indication information is newly added to the existing measurement configuration information, and the first indication information is used to indicate that when the UE 1 reports the measured information based on the existing measurement configuration information, the UE 1 also reports the SMTC information of the at least one neighboring frequency or the SMTC information of the at least one neighboring cell.

For example, base station 1 sends measurement configuration information for the Synchronization Frame Time Difference (SFTD) to UE1. The measurement configuration information for the SFTD includes first indication information, which is used to indicate that when UE1 reports the measured SFTD information, it also reports the SMTC information of at least one neighboring frequency or the SMTC information of at least one neighboring cell.

In the embodiments of this application, the existing measurement configuration information may also be measurement configuration information for measurement events such as A3, A4, A5, and the like, and a specific measurement event is not limited.

Optionally, when the UE1 is in a connected state, the UE1 may use the foregoing manner 1 or manner 2 (that is, manner 1 or manner 2 is measurement in the connected state) to perform the measurement. When the UE1 is in the connected state, the first measurement configuration information includes SMTC#1, and the base station 1 may first configure the period of the SMTC#1 to 5 ms, or the period may also be set to 5 ms. This can ensure that after the UE1 measures the SSB information of the neighboring cell and reports the SMTC information of the neighboring cell, the base station 1 can subsequently configure the SMTC for the UE1 or another UE based on the SMTC information of the neighboring cell reported by the UE1.

Method 3: The first measurement configuration information is used to indicate UE1 to measure SMTC in an idle state or inactive state, and after UE1 transitions from the idle state or inactive state to the connected state, the SMTC information obtained from the measurement is reported to base station 1.

For example, base station 1 adds second indication information to the measurement configuration information of neighboring frequency points carried in the system information, wherein the second indication information is used to indicate UE1 to measure the SMTC information of neighboring cells or neighboring frequency points.

S602: UE1 measures the SSB of a neighboring cell based on the first measurement configuration information, thereby obtaining the SSB information or SMTC information of the neighboring cell.

That is, the UE1 performs SSB measurement on a neighboring cell (or a frequency of a neighboring cell) based on the first measurement configuration information, thereby obtaining SSB information or SMTC information of the neighboring cell.

Corresponding to the implementation 1, the UE1 performs SSB measurement (or SSB measurement on a neighboring frequency) on a neighboring cell based on the first measurement configuration information, thereby obtaining SSB information (or SSB information on a neighboring frequency) of the neighboring cell. The SSB information obtained by the UE1 after performing SSB measurement on a neighboring frequency may be at a granularity of the neighboring frequency, or may be at a granularity of a cell measured on the neighboring frequency, which is not limited in this regard.

Corresponding to the implementation 2, the UE1 performs SMTC measurement (or SMTC measurement of adjacent frequency points) on neighboring cells based on the first measurement configuration information, thereby obtaining the SMTC information (or the SMTC information of adjacent frequency points) of the neighboring cells.

S603: UE1 sends SSB information or SMTC information of neighboring cells to base station 1.

In a possible implementation, the UE1 may also send SSB information or SMTC information of neighboring cells to other base stations.

Corresponding to Implementation 1 in S601, UE1 sends the measured SSB information of a neighboring cell or the measured SSB information of a neighboring frequency to the base station. The SSB information obtained by UE1 after performing SSB measurement on a neighboring frequency may be at the granularity of the neighboring frequency, or may be at the granularity of the cell measured on the neighboring frequency, which is not limited in this regard.

For example, in the following, an example is provided where the SSB information of neighboring cell 1 of the terrestrial network TN (terrestrial network) reported by UE1 to base station 1 is considered. The reference timing of the SSB information of neighboring cell 1 may include the following several scenarios:
Case 1: The SSB information of the neighboring cell 1 is based on the timing of the neighboring cell 1 as a reference, and the SSB information may include at least one of the following:
an SSB period, third indication information, a quantity of SSBs, an SSB pattern (bitmap), an SSB pattern type, an identifier ID of the neighboring cell 1, an SSB subcarrier spacing, and a measured time domain position of the SSB.

The third indication information is used to indicate that the SSB is in the first half frame or the second half frame of the radio frame of the neighboring cell 1, or the third indication information is information about the first half frame of the radio frame of the neighboring cell 1 or information about the second half frame of the radio frame of the neighboring cell 1 where the SSB is located.

The measured time domain position of the SSB may be a position of an index of a first SSB measured by the UE 1, or may be a position of an index of any SSB measured by the UE 1, which is not limited herein.

For example, referring to FIG. 1, a frequency of the non-synchronized TN cell (which is equivalent to a frequency of the neighboring cell 1 is frequency A. SSB information of the non-synchronized TN cell that can be measured by the UE 1 includes: an SSB (that is, an SSB represented by a bold box in FIG. 1) period of 10 ms, an SSB pattern of the TN cell of type C, eight SSB carriers, or an SSB bitmap of 11111111, and an SSB is distributed in the first half frame. The serving cell of the UE 1 is an NTN cell, and the UE 1 reports the SSB information of the TN cell (that is, the SSB information of the neighboring cell 1) to the NTN cell (that is, the serving cell). From the perspective of the non-synchronized TN transmitter, the SSB information corresponding to the bold font (0, 1) in FIG. 1 is reported. This SSB information may be equivalent to SMTC information that is transmitted from the target cell to the source cell through an Xn interface in the prior art.

In the following S604, when the NTN cell (that is, the serving cell) configures the SMTC of the asynchronized TN cell (equivalent to the SMTC of the neighboring cell 1) or the SMTC of the frequency of the asynchronized TN cell (equivalent to the SMTC of the neighboring frequency) for the UE 1, the NTN cell needs to perform conversion based on the SSB information reported by the UE 1 and the SFTD reported by the UE 1 between the NTN cell (that is, the serving cell) and the asynchronized TN cell (equivalent to the neighboring cell 1), and then deliver the converted SFTD to the UE 1.

For example, as shown in FIG. 1, if an offset reported by offsetUE of the SMTC 1 of the asynchronized TN cell (neighboring cell 1) is 0, and an SFTD obtained by the NTN cell (that is, the serving cell) between UE 1 and the NTN cell (that is, the serving cell) and the asynchronized TN cell (that is, the neighboring cell 1) is 3 subframes, the offset obtained by the NTN cell (that is, the serving cell) between UE 1 and the asynchronized TN cell (that is, the neighboring cell 1) is 3 subframes.

When the propagation delay difference between UE1 and the NTN cell (i.e., the serving cell) and/or the non-synchronized TN cell (i.e., neighboring cell 1) is not zero, then in the following S604, base station 1 needs to consider the propagation delay difference when configuring the SMTC of neighboring cell 1 for UE1. For example, if the serving cell of UE1 is an NTN cell, and neighboring cell 1 of UE1 is a TN cell, and the propagation delay between UE1 and the TN cell is zero, then in the following step 604, when base station 1 configures the SMTC of neighboring cell 1 for UE1, it needs to consider the propagation delay from UE1 to the NTN cell (i.e., the serving cell). Referring to FIG. 1, where the original offset in SMTC1 is 3 and the propagation delay is 11 subframes, the offset in the SMTC configured for UE1 would then be 2.

Case 2: The SSB information is referenced based on the timing of the serving cell of the UE1, and the SSB information may include at least one of the following:
SSB period, number of SSBs, SSB pattern type, identifier ID of the neighboring cell, SSB subcarrier spacing, and the measured time domain position of the SSB.

For example, as shown in FIG. 1, the SSB information (which is equivalent to the SSB information of a neighboring cell) of an unsynchronized TN cell measured by UE1 is based on the timing of serving cell of UE1 as a reference (i.e., the signal from the transmitting end is used for timing). The SSB information of the asynchronized TN cell reported by UE1 includes: an SSB period of 10 ms, an SSB pattern of type C, and the time domain position of the measured SSB 0 being at subframe 3.

In the following S604, when configuring SMTC for each UE (including UE1) served by base station 1, the propagation delay corresponding to each UE needs to be considered.

Case 3: The SSB information is based on the timing of UE1 as a reference, and the SSB information may include at least one of the following:
SSB period, number of SSBs, SSB pattern type, identifier ID of a neighboring cell, subcarrier spacing of the SSB, and the time domain position of the measured SSB;

Among these, the time domain position of the measured SSB may be the position of the index of the first SSB measured by UE1, or may be the position of the index of any SSB measured by UE1, without any limitation thereto.

For example, as shown in FIG. 1, the SSB information (which is equivalent to the SSB information of a neighboring cell) of the asynchronous TN cell measured by UE1 is based on the timing of UE1 as a reference. The SSB information of the asynchronous TN cell reported by UE1 includes: an SSB period of 10 ms, an SSB pattern of type C, and the time domain position of the measured SSB 0 being at subframe 2 of frame number 0.

In the following S604, when base station 1 configures SMTC for UE1, it can directly configure it based on the SSB information reported by UE1. When base station 1 configures SMTC for other UEs it serves, it needs to consider the propagation delay between UE1 and the serving cell when UE1 reports the SSB information of an asynchronous NTN cell (i.e., a neighboring cell), or the propagation delay between UE1 and the neighboring cell, or the difference between the propagation delay from UE1 to the NTN cell (i.e., the serving cell) and the propagation delay from UE1 to the asynchronous NTN cell (i.e., the neighboring cell), or the propagation delay between other UEs and the NTN cell (i.e., the serving cell), or the propagation delay between other UEs and the neighboring cell, or the difference between the propagation delay from other UEs to the NTN cell (i.e., the serving cell) and the propagation delay between other UEs and the asynchronous NTN cell (i.e., the neighboring cell), to configure the SMTC for each UE.

In the above, UE1 accesses base station 1 through the serving cell. The serving cell is the cell managed by base station 1.

Based on the implementation 2 mentioned above, UE1 sends the SMTC information measured at the neighboring frequency or the SMTC information of the measured neighboring cell to the base station.

For example, in the following, an instance is provided where UE1 reports the SMTC information of neighboring cell 1 of the terrestrial network TN to base station 1. The reference timing of the SMTC information of neighboring cell 1 may include the following scenarios:
Case 1: The SMTC information is based on the timing of a neighboring cell as a reference (which may also be referred to as SMTC information based on neighboring cell timing).

For case 1, before UE1 reports the SMTC information of neighboring cell 1 to base station 1, the process also includes: determining, by the UE1, the SMTC information based on the timing of the neighboring cell according to the measured SMTC information. For example, UE1 calculates the SMTC information based on the timing of the neighboring cell according to the measured SMTC information, the first SFTD, and the first propagation delay T1 (or the first propagation delay difference).

Among them, the first transmission delay T1 is the propagation delay from UE1 to the neighboring cell (or the base station of the neighboring cell);
The first propagation delay difference is the difference between the delay from UE1 to the serving cell (or base station 1) and the delay from UE1 to the neighboring cell (or the base station of the neighboring cell). For example, the first propagation delay difference = T1 - T2, wherein T2 is the propagation delay from UE1 to the serving cell (or base station 1).

Case 2: The SMTC information is based on the timing of the serving cell as a reference(or may also be referred to as SMTC information based on the timing of the serving cell).

Case 3: The SMTC information is based on the timing of UE1 as a reference(or may also be referred to as SMTC information based on the timing of UE1).

S604: The base station 1 configures updated SMTC information for UE1 based on the SSB information or the SMTC information.

For case 1 in the implementation 1 mentioned above (the SSB information of neighboring cell 1 with the timing of neighboring cell 1 as a reference, hereinafter referred to as the SSB information of neighboring cell 1 based on the timing of neighboring cell 1):
The base station 1 configures updated SSB information of neighboring cell 1 for UE1 based on the SSB information of neighboring cell 1 with the timing of neighboring cell 1 as a reference, in the following ways:
Method 1: Base station 1 determines the updated SMTC information of neighboring cell 1 according to the SSB information of neighboring cell 1 based on the timing of neighboring cell 1, the SFTD between the serving cell of UE1 and neighboring cell 1, and the propagation delay T1 from UE1 to base station 1.

Method 2: Base station 1 configures updated SMTC information of neighboring cell 1 for UE1 according to the SSB information of neighboring cell 1 based on the timing of neighboring cell 1, the SFTD between the serving cell of UE1 and neighboring cell 1, and the difference between the propagation delay from UE1 to the base station 1 and the propagation delay from UE1 to the base station of neighboring cell 1 (propagation delay difference = T1 - T2). Here, T1 is the propagation delay from UE1 to base station 1, and T2 is the propagation delay from UE1 to the base station of neighboring cell 1.

The SFTD between the serving cell of the aforementioned UE1 and neighboring cell 1 may be sent by UE1 to base station 1, or base station 1 may obtain it through other means, and this is not limited. The propagation delay T1 from UE1 to base station 1, as well as the difference between the propagation delay from UE1 to the base station 1 and the propagation delay from UE1 to the base station of neighboring cell 1 (propagation delay difference = T1 - T2) can be sent by UE1 to the serving base station 1.

In the above, the base station of neighboring cell 1 is the base station adjacent to base station 1.

In case 1, the SSB information reported by UE1 to base station 1 is the SSB information of neighboring cell 1 with the timing of neighboring cell 1 as a reference, therefore, base station 1 first converts, based on the SFTD between the serving cell of UE1 and neighboring cell 1, the SSB information of neighboring cell 1 with the timing of neighboring cell 1 as a reference into the SSB information of neighboring cell 1 with the timing of the serving cell as a reference. Subsequently, when configuring the SMTC information for each served UE (including UE1), the base station 1 can configure the corresponding SMTC information for each UE based on the propagation delay from each UE to the serving cell. For example, base station 1 configures the SMTC information of neighboring cell 1 for UE1 based on the converted SSB information of neighboring cell 1 with the timing of the serving cell as a reference and the propagation delay from UE1 to the serving cell.

For example, if the serving cell serves not only UE1 but also UE2, then base station 1 may also configure the SMTC information of neighboring cell 1 for UE2 in the same manner as for UE1. Specifically, base station 1 may configure the SMTC information of neighboring cell 1 for UE2 according to the SSB information of neighboring cell 1 reported by UE1 based on the timing of neighboring cell 1, the SFTD between the serving cell and neighboring cell 1, and the propagation delay from UE2 to base station 1 (or the difference between the propagation delay form UE2 to the base station 1 and the propagation delay from UE2 to the base station of neighboring cell 1),

For the case 2 in implementation 1 (where the SSB information of neighboring cell 1 with the timing of the serving cell of the UE1 as a reference (hereinafter referred to as the SSB information of neighboring cell 1 based on the serving cell timing) in the following:
The base station 1 configures updated SMTC information of neighboring cell 1 for the UE1 according to the SSB information of neighboring cell 1 based on the timing of the serving cell, through the following methods:
Method 1: Base station 1 configures updated SMTC information of neighboring cell 1 for UE1 according to the SSB information of neighboring cell 1 based on the timing of the serving cell, and the propagation delay T1 from UE1 to base station 1.
Method 2: Base station 1 configures updated SMTC information for UE1 according to the SSB information of neighboring cell 1 based on the timing of the serving cell, and the difference between the propagation delay from UE1 to base station 1 and the propagation delay from UE1 to the base station of neighboring cell 1 (propagation delay difference = T1 - T2). Here, T1 is the propagation delay from UE1 to base station 1, and T2 is the propagation delay from UE1 to the base station of neighboring cell 1. The base station of neighboring cell 1 is a base station adjacent to base station 1.

Additionally, if the serving cell also serves other UEs, such as UE2, in addition to serving UE1, then base station 1 may similarly configure the SMTC information of neighboring cell 1 for UE2 in the same manner as for UE1. Base station 1 may configure the SMTC information of neighboring cell 1 for UE2 according to the SSB information of neighboring cell 1 based on the timing of the serving cell reported by UE1, as well as the propagation delay from UE2 to base station 1 (or the difference between the propagation delay form UE2 to base station 1 and the propagation delay form UE2 to the base station of neighboring cell 1).

For the case 3 in the implementation 1 (where the SSB information of neighboring cell 1 is based on the timing of UE1, hereinafter referred to as the SSB information of neighboring cell 1 based on the timing of UE1):
The base station 1 configures updated SMTC information of neighboring cell 1 for UE1 according to the SSB information of neighboring cell 1 based on the timing of UE1 in the following ways:
The base station 1 can directly configure updated SMTC information of neighboring cell 1 for UE1 according to the SSB information of neighboring cell 1 based on the timing of UE1.

In addition, if the base station also serves other UEs, such as UE2, the base station 1 configures the SMTC information of neighboring cell 1 for UE2 based on the SSB information of neighboring cell 1 based on the timing of UE1, the propagation delay from UE1 to the serving cell (or the difference between the propagation delay from UE1 to the serving cell and the propagation delay from UE1 to neighboring cell 1), and the propagation delay from UE2 to the serving cell (or the difference between the propagation delay from UE2 to the serving cell and the propagation delay from UE2 to neighboring cell 1).

For the case 1 in the implementation 2 mentioned above (SMTC information based on the timing of a neighboring cell, hereinafter referred to as the SMTC information of neighboring cell 1 based on the timing of neighboring cell 1):
Base station 1 configures updated SMTC information of neighboring cell 1 for UE1 according to the SMTC information of neighboring cell 1 based on the timing of neighboring cell 1, which includes the following:
Method 1: Base station 1 determines the updated SMTC information of neighboring cell 1 according to the SMTC information of neighboring cell 1 based on timing of neighboring cell 1, the SFTD between the serving cell of UE1 and neighboring cell 1, and the propagation delay T1 from UE1 to base station 1.
Method 2: Base station 1 according to the SMTC information based on the timing of neighboring cell 1, the SFTD between the serving cell of UE1 and neighboring cell 1, and the difference between the propagation delay from UE1 to base station 1 and the propagation delay from UE1 to the base station of neighboring cell 1 (where the propagation delay difference = T1 - T2), wherein T2 is the propagation delay from UE1 to the base station of neighboring cell 1.

In case 1, the SMTC information reported by UE1 to base station 1 with the timing of neighboring cell 1 as a reference. Therefore, base station 1 first converts, based on the SFTD between the serving cell of UE1 and neighboring cell 1, the SMTC information of neighboring cell 1 with the timing of neighboring cell 1 as a reference, into the SMTC information of neighboring cell 1 with the timing of the serving cell as a reference. Subsequently, when configuring the SMTC information for each served UE (including UE1), the base station 1 can configure the corresponding SMTC information for each UE based on the propagation delay from each UE to the serving cell.

For example, if the serving cell serves not only UE1 but also UE2, then base station 1 may also configure the SMTC information of neighboring cell 1 for UE2 in the same manner as for UE1. Specifically, base station 1 may configure the SMTC information of neighboring cell 1 for UE2 according tothe SMTC information of neighboring cell 1 reported by UE1 based on the timing of neighboring cell 1, the SFTD between the serving cell and neighboring cell 1, and the propagation delay from UE2 to base station 1 (or the difference between the propagation delay from UE2 to base station 1 and the propagation delay from UE2 to the base station of neighboring cell 1).

For the case 2 in the implementation 2 (where the SMTC information is based on the timing of the serving cell as a reference, hereinafter referred to as the SMTC information of neighboring cell 1 based on the timing of the serving cell) described above:
Base station 1 configures updated SMTC information of neighboring cell 1 for UE1 according to the SMTC information based on the timing information of neighboring cell 1, in the following ways:
Method 1: Base station 1 determines the updated SMTC information of neighboring cell 1 according to the SMTC information based on the timing of neighboring cell 1 and the propagation delay T1 from UE1 to base station 1.
Method 2: Base station 1 determines the updated SMTC information according to the SMTC information based on the timing of neighboring cell 1 and the difference between the propagation delay from UE1 to base station 1 and the propagation delay from UE1 to the base station of neighboring cell 1 (propagation delay difference = T1 - T2). Here, T1 is the propagation delay from UE1 to base station 1, and T2 is the propagation delay from UE1 to the base station of neighboring cell 1.

For case 3 in the implementation 2 (where SMTC information is based on the timing of UE1 as a reference, which is hereinafter referred to as SMTC information of neighboring cell 1 based on the timing of UE1):
Base station 1 configures updated SMTC information of neighboring cell 1 for UE1 according to the SMTC information based on the timing of UE1, which includes: base station 1 using the SMTC information based on the timing of UE1 as the updated SMTC information of neighboring cell 1 to be configured for UE1.

Additionally, if the serving cell also serves other UEs, such as UE2, in addition to serving UE1, base station 1 may determine the SMTC information of neighboring cell 1 according to the SMTC information of neighboring cell 1 reported by UE1 based on the timing of the serving cell, and the propagation delay from UE2 to base station 1 (or the propagation delay difference between base station 1 and the base station of neighboring cell 1), and then send the SMTC information of this neighboring cell to UE2.

S605: The base station 1 sends updated SMTC information to UE1.

In implementation 1, when the serving base station cannot exchange SMTC information with neighboring base stations, the serving base station may measure the SSB information or SMTC information of at least one neighboring cell or at least one neighboring frequency by the accessed UE, and report the information to the serving base station. Subsequently, the serving base station can configure more accurate SMTC information for each served UE based on the SSB information or SMTC information reported by the UE, thereby improving the measurement efficiency of the UE and reducing the power consumption generated by the measurement.

An embodiment of this application further provides another measurement configuration method. This method may be applicable to, but is not limited to, the communication system shown in FIG. 2, and may be applicable to, but is not limited to, the specific communication scenarios shown in FIG. 4A, FIG. 4B, FIG. 4C, and FIG. 4D. This method may be performed by a terminal device or an access network device; or this method may be performed by components (modules, chips, or the like) corresponding to the terminal device and the access network device; or this method may be performed by an apparatus that is used in a corresponding and matching manner with the terminal device and the access network device. It can be understood that this application does not specifically limit the specific structure of the execution entity of the method provided in embodiments of this application or the quantity of the execution entities, provided that a program that records code of the method provided in embodiments of this application can be run to perform communication according to the method provided in embodiments of this application. The following uses an interaction between a terminal device and an access network device as an example for description. The order of the steps in the following processes is merely an example, and in actual application, the steps in each process may be performed in a different order.

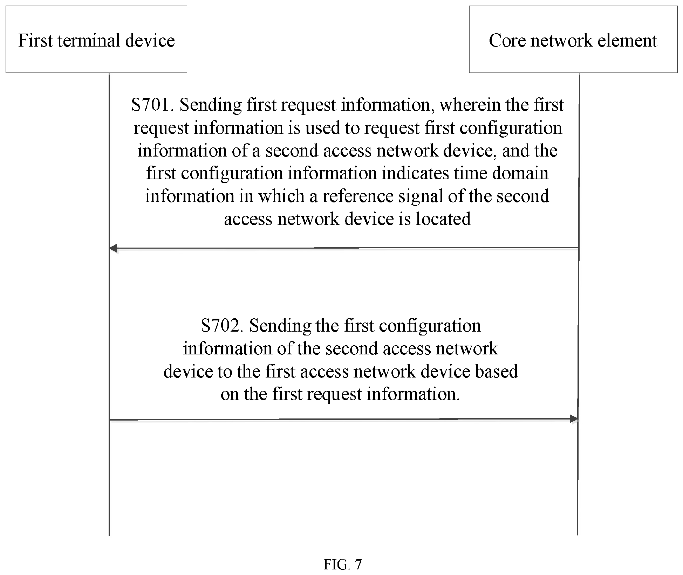

Referring to FIG. 7, the specific procedure of the method is as follows:
S701: The first access network device sends first request information to a core network element, where the first request information is used to request first configuration information of a second access network device, and the first configuration information is used to indicate time domain information in which a reference signal of the second access network device is located. Correspondingly, the core network element receives the first request information.

In the embodiments of this application, the first request information sent by the first access network device to the core network element to request the first configuration information of the second access network device may be implemented in the following ways, which may include but are not limited to:
Method 1: The first request information includes indication information of the second access network device.

For example, the indication information of the second access network device may be an identifier ID of the second access network device, location information of the second access network device, or the like.

Method 2: The first request information includes first location information. This first location information may be used by the core network element to determine the second access network device. The first location information may be associated with the second access network device, for example, the first location information may correspond to the identification information or location information of the second access network device.

Method 3: The first request information includes indication information of the second access network device and indication information of a second cell managed by the second access network device. The second cell may be any cell managed by the second access network device.

For example, the indication information of the second access network device may be an identifier ID of the second access network device, or location information of the second access network device, and so on. The indication information of the second cell may be a PCI of the second cell, or location information of the second cell, and so on.

S702: The core network element sends first configuration information of the second access network device to the first access network device based on the first request information. Correspondingly, the first access network device receives the first configuration information of the second access network device.

In a possible implementation, before S701 or S702, the method further includes: receiving, by a core network element, first configuration information of at least one access network device, wherein the configuration information of the at least one access network device includes the first configuration information of the second access network device.

Optionally, the core network element (referred to as network element #1) that interacts with the first access network device and the core network element (referred to as network element #2) that interacts with the at least one access network device may be the same core network element, or may be different core network elements. If they are different core network elements, network element #1 sends the first request information to network element #2, network element #2 sends the first configuration information to network element #1, and then network element #1 sends the first configuration information to network element #2.

Optionally, the first configuration information is configuration information based on the timing of a cell in the second access network device as a reference.

In the embodiments of this application, when the core network element performs S702, the following several scenarios may be included:
Case 1: Corresponding to the method 1 in the above S701, the core network element sends the first configuration information of the second access network device to the first access network device based on the indication information of the second access network device, wherein the first configuration information includes the configuration information of all cells managed by the second access network device.
Case 2: Corresponding to the method 2 in the above S701, the core network element determines the second access network device based on the first location information; then, the core network element sends the first configuration information of the second access network device to the first access network device, wherein the first configuration information includes the configuration information of all cells managed by the second access network device.
Case 3: Corresponding to the method 3 in the above S701, the core network element sends the first configuration information of the second access network device to the first access network device based on the indication information of the second access network device and the indication information of the second cell, wherein the first configuration information includes the configuration information of the second cell.

In the above, the configuration information of the cell may include, but is not limited to, one or more of the following items: frequency information, subcarrier spacing of a reference signal, timing configuration of a reference signal, bitmap pattern of a reference signal, physical cell identifier PCI, and coverage information of the cell.

In a possible implementation, the method further includes: sending, by the first access network device, second configuration information to the first terminal device, wherein the second configuration information is determined based on the first configuration information, and the second configuration information is used to indicate a timing configuration for the first terminal device to perform a measurement on a reference signal of at least one neighboring cell.

For example, the timing configuration for the first terminal device to perform a measurement on the reference signal of the second cell may be the timing configuration of the reference signal in the configuration information of the second cell.

In summary, an embodiment of this application further provides a measurement configuration method. The method includes: a first access network device sending first request information to a core network element, wherein the first request information is used to request first configuration information of a second access network device, and the first configuration information is used to indicate time domain information in which a reference signal of the second access network device is located; then, the first access network device receives the first configuration information from the core network element, wherein the first configuration information is reported by the second access network device to the core network element. In this method, the first access network device may obtain, through the core network element, the time domain information in which the reference signal of the neighboring access network device (the second access network device) is located, so that the first access network device can effectively and accurately obtain a timing configuration for measuring the reference signal of the neighboring access network device (the second access network device) based on the time domain information in which the reference signal of the neighboring access network device (the second access network device) is located.

### Implementation 2:

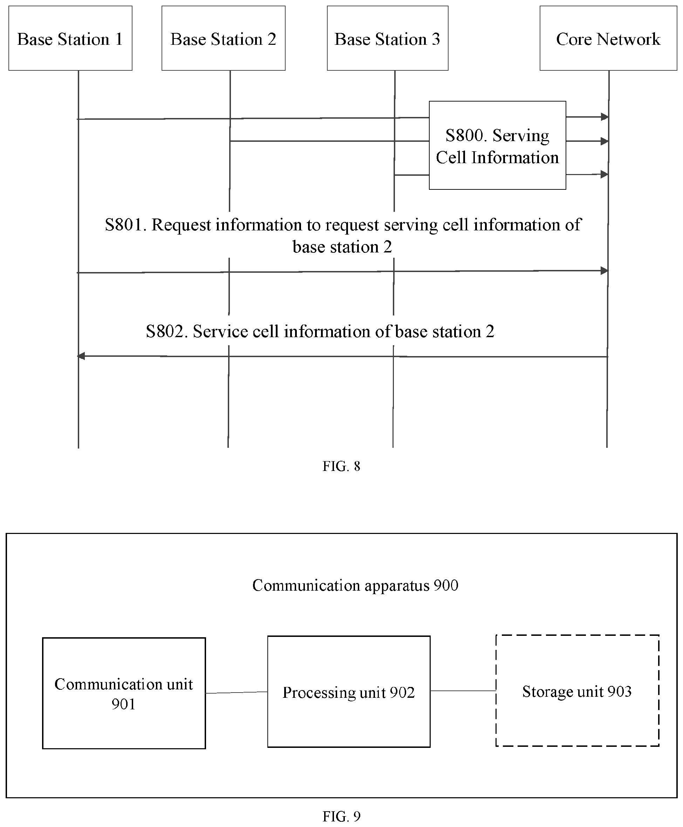

Based on the method described in the above-mentioned 7, in implementation 2, the first terminal device is illustrated using UE1 as an example, the first access network device is illustrated using base station 1 as an example, wherein base station 1 serves UE1, and the second access network device is illustrated using base station 2 (or base station 3) as an example, wherein base station 2 (or base station 3) is a base station adjacent to base station 1. Referring to FIG. 8, the specific procedure of this implementation 2 is as follows:
S800: Base station 1, base station 2, and base station 3 each send their respective serving cell information (equivalent to the first configuration information in the solution described in the above-mentioned FIG. 7) to the core network, wherein the serving cell information includes time information for measurement.

The serving cell information sent by each base station to the core network includes time information for measuring each cell, wherein the time information for measuring any one of the cells may include, but is not limited to, one or more of the following items:
Frequency, SSB subcarrier spacing, SMTC, SSB pattern, PCI, and cell coverage information.

Optionally, base station 1, base station 2, and base station 3 each also send the identifier ID of the base station to the core network.

In this implementation, base station 1, base station 2, and base station 3 are used as examples of access network devices, which report their respective serving cell information to the core network. In practice, there may be more or fewer access network devices, and all of them may perform the operations according to S800, without any limitation.

Step S800 is an optional step.

S801: Base station 1 sends a request message to the core network to request the serving cell information of base station 2.

When base station 1 is unable to exchange information with adjacent base stations (such as base station 2 or base station 3), base station 1 may perform S801.

S802: The core network sends the serving cell information of base station 2 to base station 1.

If, in S801, the request information sent by base station 1 to the core network includes the identification ID of base station 2, then in S802, after receiving this request information, the core network sends the serving cell information of base station 2 to base station 1.

Optionally, the request information includes the location information of UE1; after receiving the request information, the core network may determine, based on the location information of UE1, that the neighboring base station of UE1 is base station 2, and then the core network may feed back the serving cell information of base station 2 to base station 1.

Optionally, the serving cell information of base station 2 sent by the core network to base station 1 may be all the information included in the serving cell information reported by base station 2 to the core network, or the time information used for measuring each cell in the serving cell information of base station 2, or a part of the time information used for measuring each cell, which is not limited in this regard.

For example, the core network receives request information from base station 1, wherein the request information carries the ID of base station 2 and is used to request the SMTC for measuring the serving cell of base station 2. In this case, the core network sends the SMTC corresponding to all cells of base station 2 to base station 1 based on the request information.

If, in S801, the request information sent by the base station to the core network also includes the identification ID of a cell served by base station 2, for example, the identification of cell 2; then, in S802, after receiving the request information, the core network sends the information of cell 2 to base station 1.

Optionally, the information about cell 2 may be the time information used for measuring cell 2 in the serving cell information of base station 2, or a part of the time information used for measuring cell 2, which is not limited in this regard.

In a possible implementation, if base station 2 does not perform the foregoing S800, after receiving the request information from base station 1, the core network may request the serving cell information of base station 2 (or information about a cell of base station 2) from base station 2, and then base station 2 sends the serving cell information of base station 2 (or information about a cell of base station 2) to the core network. Subsequently, the core network sends the serving cell information of base station 2 (or information about a cell of base station 2) to base station 1.

It should be noted that in the above S801-S802, the process is described by using an example where base station 1 requests the serving cell information of base station 2. Base station 1 may also request the serving cell information of other neighboring base stations (such as base station 3) from the core network, and these requests can be executed by referring to the method by which base station 1 requests the serving cell information of base station 2. For other base stations (such as base station 2 or base station 3) requesting the serving cell information of neighboring base stations from the core network, the process can also be performed by referring to the method by which base station 1 requests the serving cell information of neighboring base stations from the core network. This will not be elaborated upon one by one here.

After S802, base station 1 may send information about the serving cells of neighboring base stations (base station 2, base station 3, or other neighboring base stations) to at least one UE performing neighbor cell measurement.

In this implementation method 2, when the serving base station cannot exchange SMTC with a neighboring base station, each base station may report the serving cell information to the core network. When a base station with a measurement requirement requests serving cell information of a neighboring base station from the core network, the core network can provide the SMTC of the neighboring base station to the base station, thereby enabling the base station to provide an accurate SMTC for measurement to the served UE. This can improve measurement efficiency and reduce the power consumption caused by the measurement.

It should be noted that, in Implementation 2, the core network is used as a relay node, enabling each base station to effectively obtain information about the serving cells of neighboring base stations. However, in the embodiments of this application, other devices (or network elements) may also be used as relay nodes to implement the functions of the core network in the embodiments of this application, which is not limited. For example, if base station 1 needs to obtain the serving cell information (such as SMTC) of base station 2, but base station 1 and base station 2 cannot exchange information, and if there is a neighboring base station 3 of base station 1 that can exchange information with base station 1 through an Xn interface, then base station 1 can also obtain the serving cell information (such as SMTC) of base station 2 through base station 3.

In the embodiments provided in the above-mentioned application, the methods provided in the embodiments of this application have been described from the perspective of interaction between each device. To implement the functions in the methods provided in the above-mentioned embodiments or implementation modes of this application, the first terminal device, the first access network device, the second access network device, or the core network element may include a hardware structure and/or a software module, and implement the aforementioned functions in the form of a hardware structure, a software module, or a combination of a hardware structure and a software module. Whether a particular function among the aforementioned functions is performed through a hardware structure, a software module, or a combination of a hardware structure and a software module depends on the specific applications and design constraints of the technical solutions.

The division into modules in the embodiments of this application is illustrative and is merely a logical function division; there may be other division methods in actual implementation. In addition, the functional modules in the embodiments or implementation modes of this application may be integrated into one processor, or may exist as separate physical entities, or two or more modules may be integrated into one module. The integrated module may be implemented in the form of hardware, or may be implemented in the form of a software functional module.

Consistent with the aforementioned concept, as shown in FIG. 9, an embodiment of this application also provides a communication apparatus 900 configured to implement the functions of the first terminal device, the first access network device, the second access network device, or the core network element in the foregoing method. For example, the communication apparatus 900 may be a software module or a chip system. In the embodiments of this application, the chip system may be formed by a chip, or may include a chip and other discrete components. The communication apparatus 900 may include a communication unit 901 and a processing unit 902.

In the embodiments of this application, the communication unit 901 may also be referred to as a transceiver unit, and may include a sending unit and/or a receiving unit, which are respectively configured to perform the steps of sending and receiving by the first terminal device, the first access network device, the second access network device, or the core network element in the foregoing method embodiments. The processing unit 902 may be configured to read instructions and/or data in the storage module, so that the communication apparatus 900 implements the foregoing method embodiments.

Optionally, the communication apparatus 900 may further include a storage unit 903, which is equivalent to a storage module and may be configured to store instructions and/or data.

The following will describe in detail the communication apparatus provided in the embodiments of this application with reference to FIG. 9 to FIG. 10. It should be understood that the descriptions of the apparatus embodiments correspond to the descriptions of the method embodiments. Therefore, for content that is not described in detail, refer to the implementation manner shown in FIG. 5 to FIG. 8 above. For brevity, details are not repeated herein.

The communication unit 901 may also be referred to as a transceiver, a transceiver machine, a transceiver apparatus, or the like. The processing unit may also be referred to as a processor, a processing board, a processing module, a processing apparatus, or the like. Optionally, a component in the communication unit 901 configured to implement a receiving function may be considered as a receiving unit, and a component in the communication unit 901 configured to implement a sending function may be considered as a sending unit, that is, the communication unit 901 includes a receiving unit and a sending unit. The communication unit may sometimes also be referred to as a transceiver machine, a transceiver, or a transceiver circuit, or the like. The receiving unit may sometimes also be referred to as a receiver machine, a receiver, or a receiving circuit, or the like. The sending unit may sometimes also be referred to as a transmitter machine, a transmitter, or a transmitting circuit, or the like.

When the communication apparatus 900 serves as the first terminal device in the procedure shown in FIG. 5 in the foregoing embodiment: the communications unit 901 is configured to receive first configuration information, wherein the first configuration information is used by the first terminal device to perform a first measurement on at least one neighboring cell, and the first measurement is a measurement of time domain information in which reference signals of the at least one neighboring cell are respectively located; and the communications unit 901 is further configured to send target measurement information to a first access network device, wherein the target measurement information includes the time domain information in which the reference signals of the at least one neighboring cell are respectively located. The processing unit 902 is configured to control the communications unit 901 to perform a sending and/or receiving function, and process data and/or information, and the like.

When the communication apparatus 900 serves as the first access network device in the procedure shown in FIG. 5 in the foregoing embodiment, both the communications unit 901 and the processing unit 902 in the communication apparatus 900 are located in the first access network device; or the communications unit 901 is located in a DU of the first access network device, and the processing unit 902 is located in a CU of the first access network device; or in an O-RAN architecture, the communications unit 901 is located in an O-DU and/or an O-RU of the first access network device, and the processing unit 902 is located in an O-CU and/or an O-DU of the first access network device.

The communication unit 901 is configured to send first configuration information, wherein the first configuration information is used by a first terminal device to perform a first measurement on at least one neighboring cell, and the first measurement is a measurement of the time domain information in which the reference signals of the at least one neighboring cell are respectively located; the communication unit 901 is further configured to receive target measurement information from the first terminal device, wherein the target measurement information includes the time domain information in which the reference signals of the at least one neighboring cell are respectively located. The processing unit 902 is configured to control the communication unit 901 to perform sending and/or receiving functions, and to process data and/or information, etc.

When the communication apparatus 900 serves as the first access network device in the procedure shown in FIG. 7 in the foregoing embodiment: both the communication unit 901 and the processing unit 902 in the communication apparatus 900 are located within the first access network device; or the communication unit 901 is located within a DU of the first access network device, and the processing unit 902 is located within a CU of the first access network device; or in an O-RAN architecture, the communication unit 901 is located within an O-DU and/or an O-RU of the first access network device, and the processing unit 902 is located within an O-CU and/or an O-DU of the first access network device. The communication unit 901 is configured to send first request information to a core network element, wherein the first request information is used to request first configuration information of a second access network device, and the first configuration information is used to indicate time domain information in which a reference signal of the second access network device is located; the communication unit 901 is further configured to receive the first configuration information from the core network element, wherein the first configuration information is reported by the second access network device to the core network element. The processing unit 902 is configured to control the communication unit 901 to perform sending and/or receiving functions, and to process data and/or information, etc.

When the communication apparatus 900 serves as the core network element in the procedure shown in FIG. 7 in the foregoing embodiment: the communication unit 901 is configured to receive first request information from a first access network device, wherein the first request information is used to request first configuration information of the second access network device; the first configuration information is used to indicate time domain information in which a reference signal of the second access network device is located; and the communication unit 901 is further configured to send the first configuration information of the second access network device to the first network device based on the first request information.

When the communication apparatus 900 serves as the second access network device in the procedure shown in FIG. 7 in the foregoing embodiment: both the communication unit 901 and the processing unit 902 in the communication apparatus 900 are located within the second access network device; or the communication unit 901 is located within a DU of the second access network device, and the processing unit 902 is located within a CU of the second access network device; or in an O-RAN architecture, the communication unit 901 is located within an O-DU and/or an O-RU of the second access network device, and the processing unit 902 is located within an O-CU and/or an O-DU of the second access network device. The processing unit 902 is configured to generate first configuration information; and the communication unit 901 is configured to send the first configuration information to a core network element, wherein the first configuration information is used to indicate time domain information in which a reference signal of the second access network device is located.

The above examples are merely illustrative; the processing unit 902 and the communication unit 901 may also perform other functions. For more detailed descriptions, please refer to the relevant descriptions in the method embodiments illustrated in FIG. 5 to 8, which will not be elaborated here.

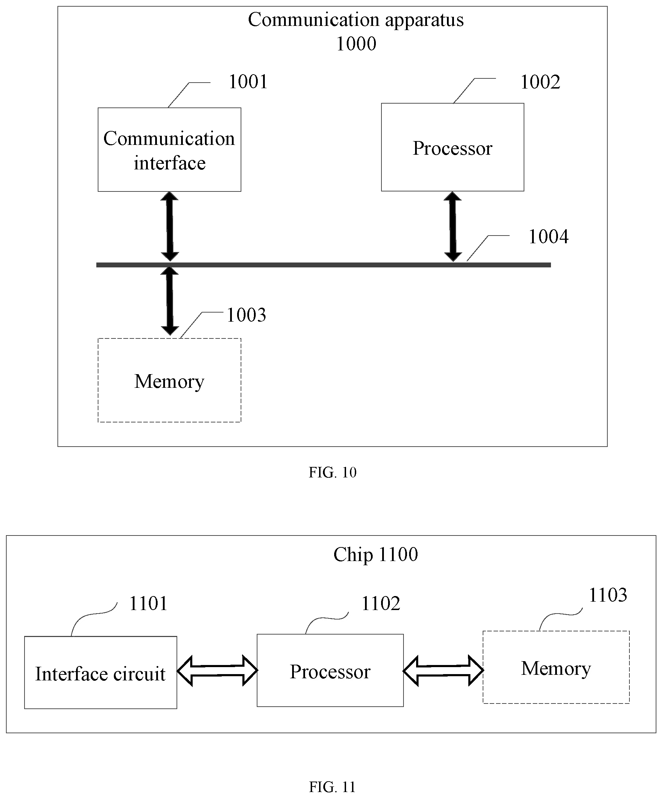

As shown in FIG. 10, the communication apparatus 1000 provided in an embodiment of this application is illustrated, wherein the communication apparatus shown in FIG. 10 may be a hardware circuit implementation of the communication apparatus shown in FIG. 9. The communication apparatus 1000 may be applicable to the flowcharts described earlier, performing the functions of the first terminal device, the first access network device, the second access network device, or the core network element in the aforementioned method embodiments. For ease of illustration, FIG. 10 only shows the main components of the communication apparatus.

As shown in FIG. 10, the communication apparatus 1000 includes a communication interface 1001 and a processor 1002. The communication interface 1001 and the processor 1002 are coupled to each other. It can be understood that the communication interface 1001 may be a transceiver or an input/output interface, or may be an interface circuit such as a transceiver circuit. Optionally, the communication apparatus 1000 may further include a memory 1003, configured to store instructions executed by the processor 1002, or to store input data required for the processor 1002 to execute instructions, or to store data generated after the processor 1002 executes instructions.

When the communication apparatus 1000 is configured to implement the methods shown in FIG. 5 to FIG. 8, the communication interface 1001 is configured to implement a function of the communication unit 901, and the processor 1002 is configured to implement a function of the processing unit 902.

A specific connection medium between the communication interface 1001, the processor 1002, and the memory 1003 is not limited in this embodiment of this application. In this embodiment of this application, the memory 1003, the processor 1002, and the communication interface 1001 are connected through a communication bus 1004 in FIG. 10. The communication bus 1004 is represented by a thick line in FIG. 10. A connection manner between other components is merely an example for description, and is not intended to be limiting. The communication bus 1004 may be classified into an address bus, a data bus, a control bus, or the like. For ease of representation, only one thick line is used to represent the communication bus in FIG. 10, but this does not mean that there is only one bus or only one type of bus.

When the communication apparatus is a chip, FIG. 11 illustrates a schematic simplified structural diagram of an apparatus of a chip. The chip 1100 includes an interface circuit 1101 and one or more processors 1102. Optionally, the chip 1100 may further include a bus. Specifically:
The processor 1102 may be an integrated circuit chip that has a signal processing capability. In an implementation process, the steps of the foregoing method for determining the service node information may be completed by an integrated logic circuit of hardware in the processor 1102 or by instructions in a form of software. The processor 1102 may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component, and may implement or perform the methods and steps disclosed in the embodiments of this application. The general-purpose processor may be a microprocessor, or the processor may be any conventional processor or the like.

The interface circuit 1101 may be used for sending or receiving data, instructions, or information. The processor 1102 may process the data, instructions, or other information received through the interface circuit 1101, and may send the processed information out through the interface circuit 1101.

Optionally, the chip further includes a memory 1103, wherein the memory 1103 may include a read-only memory and a random access memory, and provide the processor with operation instructions and data. A part of the memory 1103 may further include a non-volatile random access memory (non-volatile random access memory, NVRAM).

Optionally, the memory stores an executable software module or a data structure, and the processor may execute a corresponding operation by invoking an operation instruction (which may be stored in an operating system) stored in the memory.

Optionally, the chip may be used in the first terminal device, the first access network device, the second access network device, or the core network element involved in the embodiments of this application. Optionally, the interface circuit 1101 may be configured to output an execution result of the processor 1102. For the method provided in one or more embodiments of this application, refer to the foregoing embodiments, and details are not described herein again.

It should be noted that the functions corresponding to the interface circuit 1101 and the processor 1102 may be implemented through hardware design, software design, or a combination of both hardware and software, and no limitation is imposed herein.

An embodiment of this application further provides a computer-readable storage medium, which stores computer instructions for implementing the method performed by the first terminal device, the first access network device, the second access network device, or the core network element in the foregoing method embodiments.

For example, when the computer program is executed by a computer, the computer can implement the method performed by the first terminal device, the first access network device, the second access network device, or the core network element in the foregoing method embodiments.

An embodiment of this application further provides a computer program product comprising instructions, where when the instructions are executed by a computer, the computer is enabled to implement the method performed by the first terminal device, the first access network device, the second access network device, or the core network element in the foregoing method embodiments.

An embodiment of this application further provides a chip, including a processor, configured to invoke a computer program or a computer instruction stored in a memory, so that the processor performs the measurement configuration method in the implementations shown in FIG. 5 to FIG. 8.

In a possible implementation, an input of the chip corresponds to the receiving operation in the implementations shown in FIG. 5 to FIG. 8, and an output of the chip corresponds to the sending operation in the implementations shown in FIG. 5 to FIG. 8.

Optionally, the processor is coupled to the memory by using an interface.

Optionally, the chip further includes a memory, and the memory stores a computer program or a computer instruction.

The processor mentioned anywhere above may be a general-purpose central processing unit, a microprocessor, an application-specific integrated circuit (application-specific integrated circuit, ASIC), or one or more integrated circuits configured to control program execution of the measurement configuration method in the implementations shown in FIG. 5 to FIG. 8. The memory mentioned anywhere above may be a read-only memory (read-only memory, ROM), another type of static storage device that can store static information and instructions, a random access memory (random access memory, RAM), or the like.

It should be noted that, for the sake of convenience and conciseness in description, the explanations and beneficial effects of the related content in any of the communication devices provided above may be referred to the embodiment of the corresponding method for determining service node information provided above, and will not be repeated here.

In this application, communication devices may further include a hardware layer, an operating system layer running on the hardware layer, and an application layer running on the operating system layer. The hardware layer may include hardware such as a central processing unit (CPU), a memory management module (MMU), and a memory (also referred to as main memory). The operating system at the operating system layer may be any one or more computer operating systems that implement service processing through processes (process), for example, a Linux operating system, a Unix operating system, an Android operating system, an iOS operating system, or a Windows operating system. The application layer may include applications such as a browser, an address book, word processing software, instant messaging software, and the like.

The module division in the embodiments of this application is an example, and is merely logical function division. In actual implementation, there may be other division. In addition, functional modules in the embodiments of this application may be integrated into one processor, or may exist independently. Alternatively, two or more modules may be integrated into one module. The integrated module may be implemented in a form of hardware, or may be implemented in a form of a software function module.

According to the description of the foregoing implementations, a person skilled in the art may clearly understand that the embodiments of this application may be implemented by using hardware, firmware, or a combination thereof. When implemented by using software, the foregoing functions may be stored in a computer-readable medium or transmitted as one or more instructions or code on a computer-readable medium. The computer readable medium includes a computer storage medium and a communication medium, wherein the communication medium includes any medium that facilitates the transfer of a computer program from one place to another. The storage medium may be any available medium that a computer can access. For example, but not limited to, the computer readable medium may include a RAM, a ROM, an electrically erasable programmable read-only memory (electrically erasable programmable read only memory, EEPROM), a compact disc read-only memory (compact disc read-only memory, CD-ROM) or other optical disk storage, magnetic disk storage medium or other magnetic storage device, or any other medium that can be used to carry or store desired program code in the form of an instruction or a data structure and can be accessed by a computer. In addition, any connection may be appropriately computer readable media. For example, if the software is transmitted from a website, server, or other remote source using a coaxial cable, fiber optic cable, twisted pair, digital subscriber line (DSL), or wireless technology such as infrared, radio, and microwave, Then a coaxial cable, a fiber optic cable, a twisted pair, a DSL, or a wireless technology such as infrared, wireless, and microwave are included in the fixing of a medium to which it belongs. As used in the embodiments of the present application, disks (disk) and disc (disc) include compact disc (compact disc, CD), laser disc, optical disc, digital video disc (DVD), floppy disk, and Blu-ray disc, wherein the disks generally copy data magnetically, Discs use lasers to optically copy data. The above combination should also be included within the protection scope of the computer readable medium.

In conclusion, the foregoing descriptions are merely embodiments of this application, but are not intended to limit the protection scope of this application. Any modification, equivalent replacement, or improvement made to this application based on the disclosure of this application shall fall within the protection scope of this application.

## Claims

1. A measurement configuration method, wherein the method is applied to a first terminal device, and comprises:
receiving first configuration information, wherein the first configuration information is used by the first terminal device to perform a first measurement on at least one neighboring cell, and the first measurement is a measurement of time domain information in which reference signals of the at least one neighboring cell are respectively located; and
sending target measurement information to a first access network device, wherein the target measurement information comprises the time domain information in which reference signals of the at least one neighboring cell are respectively located.

2. The method according to claim 1, wherein the first configuration information comprises information about the at least one neighboring cell and/or information about neighboring frequencies corresponding to the at least one neighboring cell; and
the first configuration information is used to indicate the first terminal device to report the target measurement information obtained by performing the first measurement on the at least one neighboring cell and/or the neighboring frequencies corresponding to the at least one neighboring cell.

3. The method according to claim 1 or 2, wherein the method further comprises:
receiving second configuration information from the first access network device, wherein the second configuration information is determined by the first access network device based on the target measurement information, and the second configuration information is used to indicate a timing configuration for the first terminal device to perform a measurement on the reference signals of the at least one neighboring cell.

4. The method according to any one of claims 1 to 3, wherein the time domain information, in which a reference signal of a first neighboring cell is located, is first slot information obtained by using a timing of receiving a downlink reference signal of a serving cell by the first terminal device as a reference; or
the time domain information, in which a reference signal of a first neighboring cell is located, is second slot information using a timing of sending a downlink reference signal by the first neighboring cell as a reference; or
the time domain information, in which a reference signal of a first neighboring cell is located, is third slot information using a timing of sending a downlink reference signal by a serving cell of the first terminal device as a reference;
the first neighboring cell is any one of the at least one neighboring cell.

5. The method according to claim 4, wherein when the target measurement information comprises the first slot information, the target measurement information further comprises at least one of a period of the reference signal of the first neighboring cell, a quantity of the reference signals, a type of the reference signal, an identifier ID of the first neighboring cell, or a subcarrier spacing of the reference signal; or
when the target measurement information comprises the second slot information, the target measurement information further comprises at least one of a period of the reference signal of the first neighboring cell, third indication information, a quantity of the reference signals, a pattern bitmap of the reference signal, a type of the reference signal, an identifier ID of the first neighboring cell, or a subcarrier spacing of the reference signal; wherein the third indication information is used to indicate that the reference signal of the first neighboring cell is located in a first half frame or a second half frame of a system radio frame of the first neighboring cell; or
when the target measurement information comprises the third slot information, the target measurement information further comprises at least one of a period of the reference signal of the first neighboring cell, a quantity of the reference signals, a type of the reference signal, an identifier ID of the first neighboring cell, or a subcarrier spacing of the reference signal.

6. The method according to any one of claims 1 to 3, wherein the time domain information, in which a reference signal of a first neighboring cell is located, is first time window information using a timing of receiving a downlink reference signal of a serving cell by the first terminal device as a reference; or
the time domain information, in which a reference signal of a first neighboring cell is located, is second time window information using a timing of sending a downlink reference signal by the first neighboring cell as a reference; or
the time domain information, in which a reference signal of a first neighboring cell is located, is third time window information using a timing of sending a downlink reference signal by a serving cell of the first terminal device as a reference;
wherein the first neighboring cell is any one of the at least one neighboring cell, and the first time window information, the second time window information, or the third time window information comprises one or more of the following:
a length of the time window, a period of the time window, or an offset of the time window.

7. The method according to any one of claims 1 to 6, wherein the method further comprises:
sending one or more of the following to the first access network device:
a timing difference between a timing of receiving a reference signal of a serving cell by the first terminal device and a timing of sending a reference signal by each of the at least one neighboring cell, a first propagation delay from the first terminal device to the serving cell of the first terminal device, a propagation delay from the first terminal device to each of the at least one neighboring cell, or a first propagation delay difference corresponding to the at least one neighboring cell;
wherein the first propagation delay difference corresponding to each neighboring cell is a difference between a propagation delay from the first terminal device to a corresponding neighboring cell and the first propagation delay.

8. A measurement configuration method, wherein the method is applied to a first access network device, and comprises:
sending first configuration information, wherein the first configuration information is used by a first terminal device to perform a first measurement on at least one neighboring cell, and the first measurement is a measurement of time domain information in which reference signals of the at least one neighboring cell are respectively located; and
receiving target measurement information from the first terminal device, wherein the target measurement information comprises the time domain information in which reference signals of the at least one neighboring cell are respectively located.

9. The method according to claim 8, wherein the first configuration information comprises information about the at least one neighboring cell and/or information about neighboring frequencies corresponding to the at least one neighboring cell; and
the first configuration information is used to indicate the first terminal device to report the target measurement information obtained by performing the first measurement on the at least one neighboring cell and/or the neighboring frequencies corresponding to the at least one neighboring cell.

10. The method according to claim 8 or 9, wherein the method further comprises:
determining, based on the target measurement information, second configuration information for a target terminal device served by the first access network device, wherein the second configuration information is used to indicate a timing configuration for the target terminal device to perform a measurement on the reference signals of the at least one neighboring cell, and the target terminal device comprises the first terminal device; and
sending the second configuration information to the target terminal device.

11. The method according to any one of claims 8 to 10, wherein the method further comprises:
receiving one or more of the following sent by the first terminal device:
a timing difference between a timing of receiving a reference signal of a serving cell by the first terminal device and a timing of sending a reference signal by each of the at least one neighboring cell, a first propagation delay from the first terminal device to the serving cell of the first terminal device, a propagation delay from the first terminal device to each of the at least one neighboring cell, or a first propagation delay difference corresponding to the at least one neighboring cell;
wherein the first propagation delay difference corresponding to each neighboring cell is a difference between the propagation delay from the first terminal device to the corresponding neighboring cell and the first propagation delay.

12. The method according to claim 11, wherein the time domain information, in which a reference signal of a first neighboring cell is located, is first slot information using a timing of receiving a downlink reference signal of the serving cell by the first terminal device as a reference; or
the time domain information, in which a reference signal of a first neighboring cell is located, is second slot information using a timing of sending a downlink reference signal by the first neighboring cell as a reference; or
the time domain information, in which a reference signal of a first neighboring cell is located, is third slot information using a timing of sending a downlink reference signal by the serving cell of the first terminal device as a reference;
the first neighboring cell is any one of the at least one neighboring cell.

13. The method according to claim 12, wherein when the target measurement information comprises the first slot information, the target measurement information further comprises at least one of a period of the reference signal of the first neighboring cell, a quantity of the reference signals, a type of the reference signal, an identifier ID of the first neighboring cell, or a subcarrier spacing of the reference signal; or
when the target measurement information comprises the second slot information, the target measurement information further comprises at least one of a period of the reference signal of the first neighboring cell, third indication information, a quantity of the reference signals, a pattern bitmap of the reference signal, a type of the reference signal, an identifier ID of the first neighboring cell, or a subcarrier spacing of the reference signal, wherein the third indication information is used to indicate that the reference signal of the first neighboring cell is located in a first half frame or a second half frame of a system radio frame of the first neighboring cell; or
when the target measurement information comprises the third slot information, the target measurement information further comprises at least one of a period of the reference signal of the first neighboring cell, a quantity of the reference signals, a type of the reference signal, an identifier ID of the first neighboring cell, or a subcarrier spacing of the reference signal.

14. The method according to claim 12 or 13, wherein when the target measurement information comprises the first slot information, the timing configuration, performed by the first terminal device on the first neighboring cell, is determined by the first access network device based on the target measurement information.

15. The method according to claim 14, wherein the target terminal device further comprises a second terminal device; and the method further comprises: obtaining a second propagation delay or a fourth propagation delay or a second propagation delay difference of the second terminal device, wherein the second propagation delay is a propagation delay from the second terminal device to the serving cell, the fourth propagation delay is a propagation delay from the second terminal device to the first neighboring cell, and the second propagation delay difference is a difference between the second propagation delay and the fourth propagation delay; and
the timing configuration, for performing a measurement on the reference signal of the first neighboring cell by the second terminal device, is determined by the first access network device based on the target measurement information, the first propagation delay, and the second propagation delay or the fourth propagation delay or the second propagation delay difference.

16. The method according to claim 12 or 13, wherein when the target measurement information comprises the second slot information;
the timing configuration, performed by the first terminal device on the first neighboring cell, is determined by the first access network device based on the target measurement information, a first timing difference, and the first propagation delay or the third propagation delay or the first propagation delay difference corresponding to the first neighboring cell, wherein the third propagation delay is a propagation delay from the first terminal device to the first neighboring cell; and
the first timing difference is a difference between a timing of receiving the reference signal of the serving cell by the first terminal device and a timing of receiving the reference signal of the first neighboring cell by the first terminal device.

17. The method according to claim 16, wherein the target terminal device further comprises a second terminal device; and the method further comprises: obtaining a second propagation delay or a fourth propagation delay or a second propagation delay difference of the second terminal device, wherein the second propagation delay is a propagation delay from the second terminal device to the serving cell, the fourth propagation delay is a propagation delay from the second terminal device to the first neighboring cell, and the second propagation delay difference is a difference between the second propagation delay and the fourth propagation delay; and
the timing configuration, for performing a measurement on the reference signal of the first neighboring cell by the second terminal device, is determined by the first access network device based on the target measurement information, the first timing difference, and the second propagation delay or the fourth propagation delay or the second propagation delay difference.

18. The method according to claim 12 or 13, wherein when the target measurement information comprises the third slot information;
the timing configuration, for performing on the reference signal of the first neighboring cell by the first terminal device, is determined by the first access network device based on the target measurement information and the first propagation delay or the third propagation delay or the first propagation delay difference corresponding to the first neighboring cell.

19. The method according to claim 18, wherein the target terminal device further comprises a second terminal device; the method further comprises: obtaining a second propagation delay or a fourth propagation delay or a second propagation delay difference of the second terminal device, wherein the second propagation delay is a propagation delay from the second terminal device to the serving cell, the fourth propagation delay is a propagation delay from the second terminal device to the first neighboring cell, and the second propagation delay difference is a difference between the second propagation delay and the fourth propagation delay; and
the timing configuration, for performing a measurement on the reference signal of the first neighboring cell by the second terminal device, is determined by the first access network device based on the target measurement information and the second propagation delay or the second propagation delay difference.

20. The method according to claim 11, wherein the time domain information, in which a reference signal of a first neighboring cell is located, is first time window information using a timing of receiving a downlink reference signal of the serving cell by the first terminal device as a reference; or
the time domain information, in which a reference signal of a first neighboring cell is located, is second time window information using a timing of sending a downlink reference signal by the first neighboring cell as a reference; or
the time domain information, in which a reference signal of a first neighboring cell is located, is third time window information using a timing of sending a downlink reference signal by the serving cell of the first terminal device as a reference;
wherein the first neighboring cell is any one of the at least one neighboring cell, and the first time window information, the second time window information, or the third time window information comprises one or more of the following:
a length of the time window, a period of the time window, or an offset of the time window.

21. The method according to claim 20, wherein when the target measurement information comprises the first time window information, the timing configuration, for performing a measurement on the reference signal of the first neighboring cell by the first terminal device, is obtained by the first access network device based on the first time window information.

22. The method according to claim 21, wherein the target terminal device further comprises a second terminal device, and the method further comprises: obtaining a second propagation delay or a fourth propagation delay or a second propagation delay difference of the second terminal device, wherein the second propagation delay is a propagation delay from the second terminal device to the serving cell, the fourth propagation delay is a propagation delay from the second terminal device to the first neighboring cell, and the second propagation delay difference is a difference between the second propagation delay and the fourth propagation delay;
the timing configuration, for performing a measurement on the reference signal of the first neighboring cell by the second terminal device, is determined by the first access network device based on the first time window information, a first timing difference, and the second propagation delay or the fourth propagation delay or the second propagation timing difference; and
the first timing difference is a difference between a timing of receiving the reference signal of the serving cell by the first terminal device and a timing of receiving the reference signal of the first neighboring cell by the first terminal device.

23. The method according to claim 20, wherein when the target measurement information comprises the second time window information;
the timing configuration, for performing a measurement on the reference signal of the first neighboring cell by the first terminal device, is determined by the first access network device based on the second time window information, and the first propagation delay or the third propagation delay or the first propagation delay difference corresponding to the first neighboring cell, wherein the third propagation delay is a propagation delay from the first terminal device to the first neighboring cell.

24. The method according to claim 23, wherein the target terminal device further comprises a second terminal device, and the method further comprises: obtaining a second propagation delay or a fourth propagation delay or a second propagation delay difference of the second terminal device, wherein the second propagation delay is a propagation delay from the second terminal device to the serving cell, the fourth propagation delay is a propagation delay from the second terminal device to the first neighboring cell, and the second propagation delay difference is a difference between the second propagation delay and the fourth propagation delay; and
the timing configuration, for performing a measurement on the reference signal of the first neighboring cell by the second terminal device, is determined by the first access network device based on the second time window information and the second propagation delay or the fourth propagation delay or the second propagation delay difference.

25. The method according to claim 20, wherein the target measurement information comprises the third time window information;
the timing configuration, for performing a measurement on the reference signal of the first neighboring cell by the first terminal device, is determined by the first access network device based on the third time window information and the first propagation delay or the third propagation delay or the first propagation difference corresponding to the first neighboring cell;
wherein the third propagation delay is a propagation delay from the first terminal device to the first neighboring cell.

26. The method according to claim 25, wherein the target terminal device further comprises a second terminal device, and the method further comprises: obtaining a second propagation delay or a fourth propagation delay or a second propagation delay difference of the second terminal device, wherein the second propagation delay is a propagation delay from the second terminal device to the serving cell, the fourth propagation delay is a propagation delay from the second terminal device to the first neighboring cell, and the second propagation delay difference is a difference between the second propagation delay and the fourth propagation delay; and
the timing configuration, for performing a measurement on the reference signal of the first neighboring cell by the second terminal device, is determined by the first access network device based on the third time window information and the second propagation delay or the fourth propagation delay or the second propagation delay difference.

27. A communication apparatus, comprising a module configured to perform the method according to any one of claims 1 to 7, or comprising a module configured to perform the method according to any one of claims 8 to 26.

28. A communication apparatus, comprising a processor; wherein the processor is configured to execute one or more computer programs or instructions stored in a memory, so that the communication apparatus performs the method according to any one of claims 1 to 7, or performs the method according to any one of claims 8 to 26.

29. A computer-readable storage medium, comprising a computer program or instructions, wherein the computer program or instructions are configured to implement the method according to any one of claims 1 to 26.

30. A computer program product, wherein the computer program product comprises a computer program, and when the computer program is run on a computer, the computer is enabled to perform the method according to any one of claims 1 to 26.
